# EUROPEAN PATENT SPECIFICATION

(11) **EP 0 944 421 B1**
(45) Date of publication and mention of the grant of the patent: **04.06.2003**
(21) Application number: 97937390.9
(22) Date of filing: 29.08.1997
(51) Int. Cl.: B01D 33/333, B01D 21/24, B01D 21/04, E21B 21/06

(54) **APPARATUS AND METHOD FOR SEPARATION OF SOLIDS FROM LIQUID**
VORRICHTUNG UND METHODE ZUR ABTRENNUNG VON FESTSTOFFEN AUS EINER FLÜSSIGKEIT
SYSTEME ET PROCEDE DE SEPARATION DE SOLIDES D'UN LIQUIDE

(30) Priority: 30.08.1996 CA 2184535
(43) Date of publication of application: 29.09.1999
(73) Proprietor: Hydrotech Dynamics Ltd., Calgary, Alberta T2P 2T3 (CA)
(72) Inventor: WILLIS, H., Craig, Calgary, Alberta T2N 3Z8 (CA); WILLIS, Bradley, C., Calgary, Alberta T2S 0E5 (CA); WILLIS, W., Brent, Calgary, Alberta T2M 1M1 (CA)
(74) Representative: Robinson, Ian Michael
(86) International application number: CA9700612
(87) International publication number: WO98008587

(56) References cited:
- EP-A- 0 278 952
- WO-A-93/12321
- PATENT ABSTRACTS OF JAPAN vol. 015, no. 252 (C-0844), 26 June 1991 & JP 03 080950 A (NAKAYA JITSUGYO KK), 5 April 1991,

## Description

This invention relates to apparatus and method for separating solids from liquids. More particularly, solids are separated from a liquid flow using an endless conveyor carrying screen filters which dredge gravity-settled solids from the bottom of a settling tank and filter solids suspended in the liquid.

While the separation of fine solids and liquids may be applicable to many processes, the apparatus and the method of the present invention is described herein with respect to the separation of solids from oil well drilling muds.

In rotary drilling of oil and gas wells, a specialized mixture, or "mud", is continuously circulated down through a drill string and back up to the surface to a tank assembly. The mud comprises a liquid carrier (typically water or diesel oil) which is mixed with additives. In the case of a water-based mud, this may include bentonite clay and various chemicals. The mud carries out several functions for assisting in the drilling process, including carrying away cuttings and fine solids produced by the drill bit as it bores through the rock. Entrained solids raise the mud's density and viscosity, leading to many drilling problems, including a reduced rate of penetration, loss of mud downhole and filter cake buildup. Therefore, for economic and environmental reasons, mud is typically treated to remove cuttings and ultrafines and the clarified product is recycled back to the active drilling mud system.

Additionally, for water based muds, a shortage of make-up water may make it imperative that the greatest portion of the mud be cleaned of fine drilled solids, for conservation of the liquid carrier.

For barite weighted muds, it is important to recycle the expensive barite and reject the low density drilled solids. Mud cleaners are typically employed which screen off coarse solids and reclaim fine barite. Unfortunately, this screening process is unable to differentiate between desirable fine barite solids and undesirable drilled solid ultrafines.

In conventional drilling practised in western Canada, a variety of processes and apparatus for separation of solids from used drilling muds are applied, generally in combination. As shown in Table 1, separation processes include the use of shale shakers, desanding and desilting hydroclones, settling tanks, large volume sumps, flocculation and centrifuges.

**Table 1**

| The frequency a combination is used | shakers | desilt & desand | sump | centr. 1 | centr. 2 | centr. 3 |
|---|---|---|---|---|---|---|
| •up to 50% | X | X | X | | | |
| REMAINING 50% | | | | | | |
| • increasing popularity | X | X | | X | | |
| • more common for deep holes | X | | | X | X | |
| • increasing use for deep holes | X | | | X | X + floc. | |

The use of the above techniques can vary depending on the stage of the drilling operation. For example, drilling from the surface for placing surface casing usually requires a drilling mud; ultrafine production is limited, and the mud is generally readily cleaned of solids. Next, during water drilling, mud is not used, and high drilling rates are achieved. Returning water is clarified and recycled to the active system. Once the water is inadequate to lift the solids, or if downhole conditions warrant, mud is again used, this time producing significant quantities of ultrafines. Finally, when the drilling is complete, the liquids of the active mud system are left contaminated with accumulated fine solids which pose a disposal problem. The volume of the liquid is the most problematical and accordingly it is conventional to strip the mud of solids to obtain easily disposable clear water and substantially dry solids.

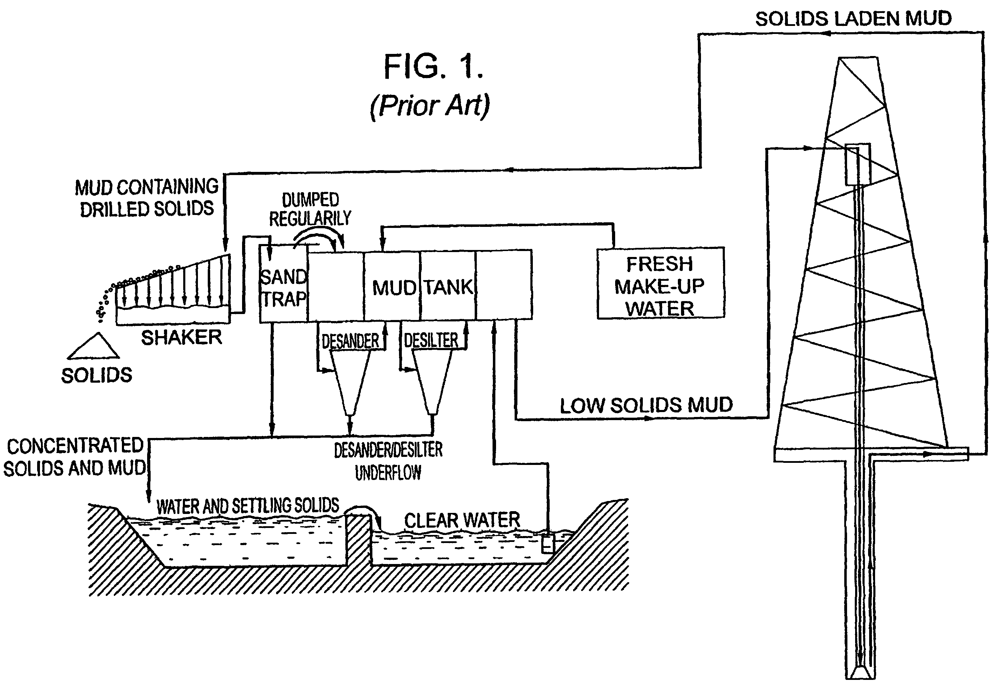

More particularly, as shown in Fig. 1, in all implementations of a conventional oil well drilling operation, a shale shaker is used. Mud returning out of the well is passed over a "shale shaker". Cuttings are recovered from the top of a screen. The shaker screen is vibrated to avoid "blinding" or plugging. Underflow is captured in a sand trap. Coarse fines settle and are periodically dumped to a pit or sump. Overflow from the sand trap is typically treated through hydroclones, or multiple stages of settling. The overflow from the final stage of settling is recycled back down the drill string to the drill bit.

Hydroclone use is usually associated with a large sump. Shaker sand trap overflow is desanded (using hydroclones greater than about 4" diameter (10.2 cm)) and desilted (hydroclones less than 4" diameter (10.2 cm)). Clarified hydroclone overflow is recycled back to the active system. Excellent performance in the active system is possible, achieving low mud densities of about 8.8 - 8.9 pounds/U.S. gal. (1054 - 1066 kg/m³) Unfortunately, the wet hydroclone underflow contains not only by large quantities of solids (including ultrafine solids of 15 (µm and less), but also a significant quantity of mud. This hydroclone underflow is rejected to one end of a sump. Make-up water, bentonite and fresh chemicals must be added to the system to compensate for that lost to the sump.

In a sump, solids in the hydroclone underflow, introduced at one end of the sump, separate under the force of gravity in the relatively quiescent conditions. Clarified, lower density drilling mud or clear water is recovered from the other end of the sump. As the solids content becomes finer, greater sump volumes are required to ensure the recycled liquid is sufficiently clarified. As a result, the sump grows in volume. Less clarified mud and its associated carrier liquid (typically water) is recycled back to the active system, requiring the addition of clear make-up liquids. This eventually leads to a need to practise expensive reclamation of a large volume of liquified waste. Accordingly, this technique is falling out of favour.

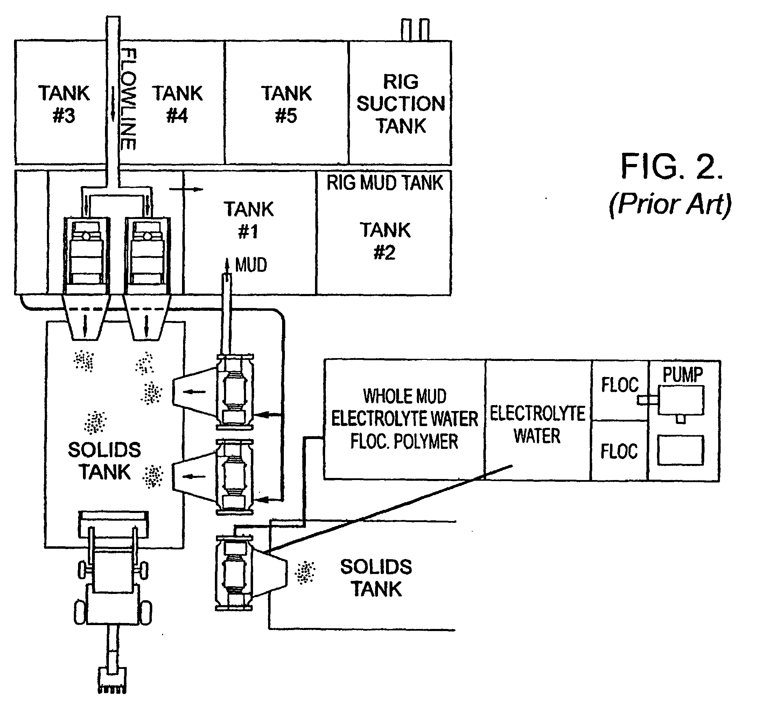

In response, the drilling industry has been progressing toward increased use of centrifuges. Accordingly, as shown in Fig. 2, a shale shaker may be combined with several stages of centrifuges.

Centrifuges use centrifugal force to effect separation of mediums of differing densities. As shown in Fig. 2, typically a pair of centrifuges operate at high speed to remove coarse and fine solids from the sand trap. The partially cleaned liquid is recycled to the active mud system. The quantity of ultrafines in the recycled liquid is a function of the centrifuge efficiency which in turn is affected by the mud viscosities employed. Use of a higher viscosity mud to entrain and lift particles from the well, also lessens the effectiveness of centrifuges to reject ultrafines. This results in a buildup of about 5 micron and smaller ultrafines in the recycled mud. To counter the buildup and avoid excessive mud densities, several approaches have been used.

One approach is to occasionally reject whole mud to a sump and add fresh, clear carrier liquid to dilute the recycled mud. As discussed above for sumps, this option is preferably avoided.

Within the past decade, the industry has responded by treating ultrafines buildup using a process known in the industry as "enhanced polymer flocculation of solids". In a separate tank, ultrafine solids are agglomerated using electrolyte and flocculating polymers to form floc in the 10-20 micron or larger size range. One of a pair of whole mud-processing centrifuges can be switched to treat flocculated ultrafine solids feed. The centrifuge spins the floc dry, dumping the floc underflow for removal by front end loader and recycling clarified liquid to the active system.

Weighted drilling muds, using barite, are used to control higher bottom hole pressures and are generally associated with the production of even higher fractions of ultrafines in the mud. Use of hydroclones results in expensive loss of barite. Adjustable g-force centrifuges are sometimes used to match the characteristics of the mud, which has initially been screened to remove the larger solids. A first stage centrifuge then removes high density ultrafine barite. The recovered barite is recycled to the active system. The overflow mud contains undesirable low gravity solids and some undesirable ultrafine barite. Enhanced polymer flocculation is again employed on the overflow. The flocs are processed in a second stage centrifuge for rejection of undesirable ultrafines.

In the past, selective flocculation has been attempted for separating undesirable ultrafine drilled solids from mud without rejection of the desirable ultrafine bentonitic component. Bentonite is generally added to alter viscosity and filtrate loss control characteristics in a drilling fluid. Selective flocculants are used to produce a very light floc from drilled solids, but not from bentonitic solids. Typical selective flocculants, are "MF-1" and "MF-55" (trade names of Kelco Oil Field Group Inc., U.S.A.), which are high-molecular weight, non-ionic polyelectrolytes. If flocculated ahead of.the shaker, the fragile floc tended to blind the shaker screens and thus water sprays have been required which unfortunately break up the flocs. If flocculated after the screens, the floc was too fragile to survive centrifuging or hydroclone separation processes. Accordingly, an extra tank or reserve pits, providing quiescent conditions, have been used for settling of the floc. Unfortunately, the resultant flocs are so light, they are difficult to detect; the result being that occasional dumping of the whole tank to a sump was necessary. Due to the above operational difficulties, the potentially beneficial practice of selective flocculation has not been widely practised.

While centrifuges reject less liquid, they are associated with a number of disadvantages including:
- The centrifuges themselves are very expensive. Their high speed use over prolonged periods make them prone to mechanical failures. Expensive centrifuge bowls need to be regularly replaced at significant cost and loss of time. Shifting operation from a first stage of centrifuges to include a second stage for the treatment of floc can nearly double the daily operating costs;
- As a result of the demanding nature of maintaining centrifuges, oil companies and drilling contractors usually do not own centrifuges but instead rent them from specialized service companies;
- Occasionally, it is not physically possible to process all of the mud using the provided centrifuges due to factors including: economic restraints on the number of centrifuges available; the volume of mud being circulated; and the mud viscosity.

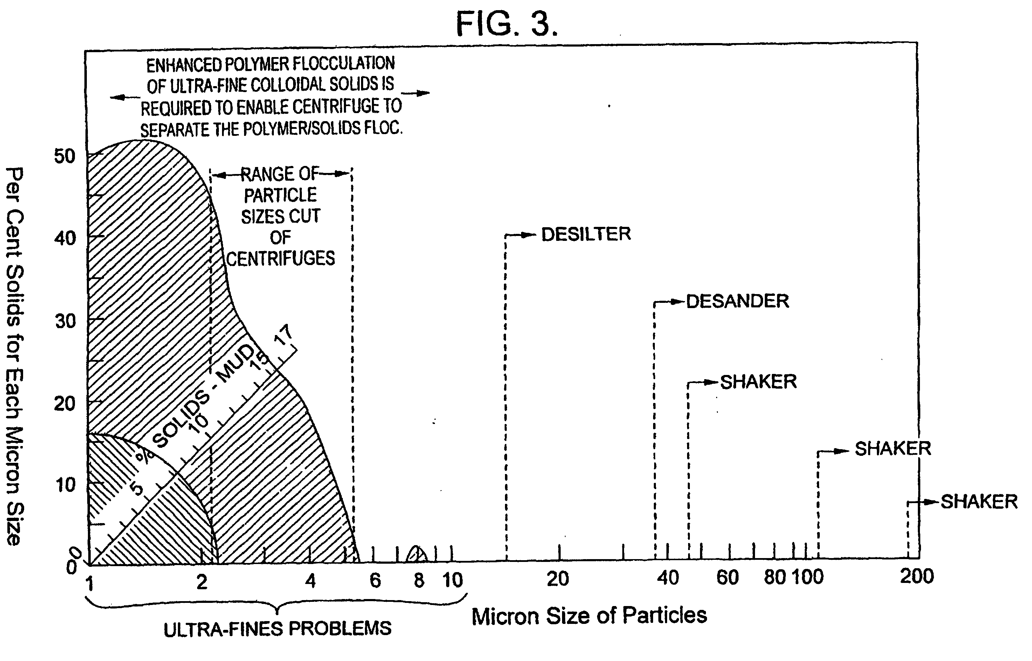

Having reference to the particle size distribution chart of Fig. 3, the effectiveness of each of the solids removal components is summarized. More particularly, a shale shaker can remove a medium cut of 44 µm and greater, a desander has a medium of cut of about 35 µm, a desilter has a cut of 15 µm and finally centrifuges, ideally processing low viscosity liquids and without flocculation, have a cut of about 2-3 µm.

In contrast with ideal conditions however, as drilling deepens, mud viscosity is raised, reducing the centrifuge effectiveness and permitting ultrafines of 6 microns and less to build up to about 90% of the solids total content.

Due to environmental concerns over large sump volumes resulting from the use of desanders and desilters, the drilling industry has been under pressure to abandon the highly effective use of hydroclones for controlling mud density and has been driven instead to apply alternative techniques such as centrifuging. Unfortunately, as a result of the limitations of such techniques, over time, the industry has accepted increased concentrations of ultrafines in the recycled muds as being a necessary evil. Drilling mud densities have climbed to 9.2 - 9.4 pounds/U.S. gal. (1102 1126 kg/m³) or higher, adversely impacting drilling rates.

In related separation art, non-centrifuge-based separation apparatus exist which practice gravity separation and filtering. Such apparatus is disclosed in US Patent 2, 941, 668 (Maus).

Also of interest is JP-A-03 080950 (Yukimi) summarised in Patent Abstracts of Japan, Vol. 015, No. 252 (C-0844), 26 June 1991. Yukimi discloses a separation method and apparatus according to the pre-characterising portion of the independent claims. The Yakumi apparatus comprises an endless chain of buckets traversing a water tank. The buckets enter the tank and pass through the water adjacent and beneath the solids entry point. The buckets quickly exit the water and are vibrated to remove excess water. The buckets have several large gauge holes formed in their bottom for releasing the excess water. The apparatus and process is applied to coarse solids.

An aim of the present invention is to provide an apparatus and process suitable for effectively clarifying liquid containing both solids which settle and ultrafines which may not.

According to the present invention there is provided a process for separating solids from liquid, as set forth in claim 1 appended hereto.

Also according to the present invention there is provided an apparatus for separating solids from liquid, as set forth in claim 24 appended hereto.

Preferred features of the invention will be apparent from the dependent claims and the description that follows.

The present invention arose from a recognition of the need to better remove solids from used drilling mud and reduce its density for improved drilling. Additionally, the removed solids should be free of excess liquid to facilitate disposal. It was noted that the solids characteristics fell into two categories:
- typically, that the largest majority of the solids were undesirable ultrafines, being the most challenging to separate; and also
- that there was a portion of the solids which readily settle.

It was further recognized that a beneficial form of drilling mud management, specifically selective flocculation, was not being effectively practised due to the inability of centrifuges to dewater the fragile flocs and the difficulty for operators to judge the state of accumulation of flocs within drilling rig tanks, requiring periodic dumping of the whole mud, with accompanying increase in sump volume.

Generally, a method is provided which effectively separates both coarse solids and ultrafine solids from a liquid stream, to produce a substantially dry solids discharge and a clarified liquid. Further, in response to greater levels of ultrafines, enhanced polymer flocculation may be practised; the resulting flocs being similarly separated. An apparatus comprising a combination of a settling tank, an endless conveyor of a plurality of screen filters, a screen vibrator and directed air streams are employed.

More particularly, the drilling mud is introduced into a settling tank. Coarse solids settle preferentially to the tank bottom. Ultrafines solids remain in suspension. Screen filters, preferably in the form of buckets having relatively coarse screens, are conveyed through a prolonged traverse of the liquid. Ultrafine solids, up to several orders of magnitude smaller that the screen openings, are captured on the screens by filtering the liquid through an ever finer build-up of filter cake. Ultrafines can be collected with 12-80 mesh (1680 to 177 µm) screen material. By continuously filtering the liquid with a large number of screens, effective collection of suspended solids is achieved. Further, the screens dredge coarse settled solids from the tank bottom. Preferably, collected coarse and ultrafine solids are dewatered by vibration of the screens and the impinging of streams of air onto the solids on the screens.

Should the fraction of ultrafine solids in the liquid increase or the particle size diminish so much as to overwhelm the dredging and filtering, then a flocculation step may be practised. The liquid containing solids is treated with an electrolyte and polymer flocculant to form flocs. The collection of solids can then be practised as described above, collecting the larger floc rather than dispersed solids. The low liquid volumes contained in the settling tank promote more efficient flocculation requiring less flocculant to obtain the same results used in a sump or centrifuge operation. Further, one can use even less flocculant, forming softer and more fragile flocs. The gentle separation and collection action of the screened buckets do not require the tightly bound flocs that the centrifuge applications demand.

The continuing trend towards the use of centrifuges and away from the use of desilters (blamed on the excessive liquid losses) results in lost solids-removal opportunity. The capability of hydroclones to remove undesirable solids is considerable, as shown in the following comparison of typical performance:

| | Desilter | Centrifuge |
|---|---|---|
| Fraction of solids rejected | 0.188 | 0.532 |
| Flow rate | 5 gpm (19 l/min) | 1 (3.8 l/min) |
| Solids rejected | 1223 lb/hr ( 2695 kg/hr) | 691 lb/hr (1522 kg/hr) |

The high liquid loss associated with desanders and desilters may now be addressed by treatment of the hydroclone underflow using the present invention. As shown in the comparison above, while desander and desilters produce a less dense solids-laden discharge stream, the flow rate can be so much higher than that produced by a centrifuge system, that the solids rejection capacity can actually be significantly higher. Coupled with the present invention to conserve the liquid which was previously lost, high throughput and low mud densities can be achieved.

In one embodiment of the invention, for water-based liquids, separation of solids is enhanced by flocculating the solids in the liquid as they flow into the first end of the tank, wherein floc is formed and are separated from the liquid as were the solids, as described above.

In another embodiment of the invention, the viscosity of the liquid can be adjusted by dilution of the incoming liquid with fresh or process clarified liquid for reducing the viscosity. Viscosity of the liquid affects settling rate, tailoring which fraction of the liquid's solids may be recovered by dredging or by filtering.

In yet another embodiment of the process, a slip stream of solids from the liquid is concentrated using conventional means, such as by hydroclones; the solids-concentrated flow is then delivered to the tank's bottom for dredging by the screened buckets.

In a staged application of the process, solids may be first washed in the apparatus by mixing coarse solids, associated with ultrafines, with recycled clarified liquid so as to create as suspension of ultrafines in the tank's liquid. Cleaned coarse solids are recovered using the screened buckets. Then, when the ultrafines in the water become sufficiently concentrated, the flow of solids is discontinued and the process of the present invention is practised for flocculating, collecting and dewatering floc to recover the ultrafines separately from the cleaned solids.

In yet another aspect of the invention, the dewatered solids are cyclically subjected first to compression for liberating additional water from the solids, and then to decompression so that liberated water may freely drain away.

For a better understanding of the invention, and to show how embodiments of the same may be carried into effect, reference will now be made, by way of example, to the accompanying diagrammatic drawings in which:
Figure 1 is a schematic of the prior art process of treating drilling mud using a sump system;
Figure 2 is a schematic of the prior art process of treating drilling mud using a centrifuging system;
Figure 3 is a particle distribution curve for a typical used drilling mud showing the effect of various prior art solids removal devices;
Figure 4 is a schematic of an embodiment of the present invention as applied to separating solids from used drilling fluids;
Figure 5 is partial cross-sectional view of the link-chain conveyor and buckets as they invert to dump out collected solids;
Figure 6 is a partial cross sectional end view of the settling tank, sloping side walls and buckets;
Figures 7a - 7d illustrate the construction of the screens buckets. More particularly:

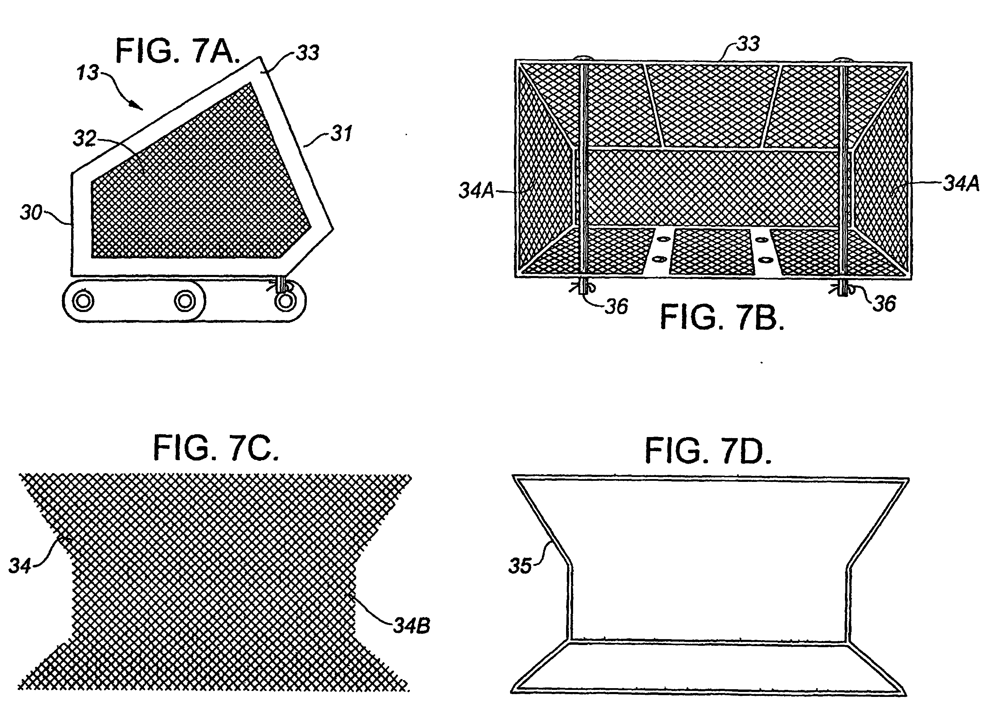

Figure 7a is a side view of the screened bucket associated with one link of chain;
Figure 7b is a front view of the screened bucket;
Figure 7c is a front view of a screen element;
Figure 7d is a front view of the screen's skeletal frame;

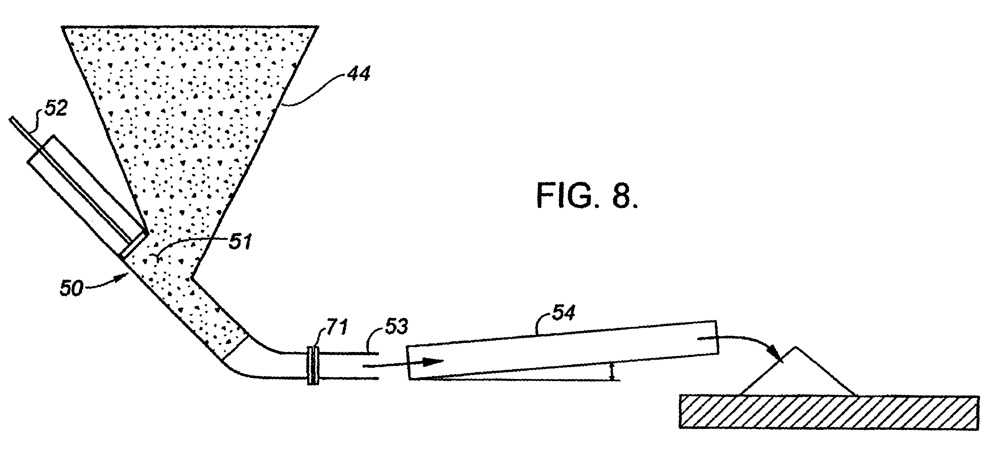

Figure 8 is a schematic side view of the plunger pump and compactor;

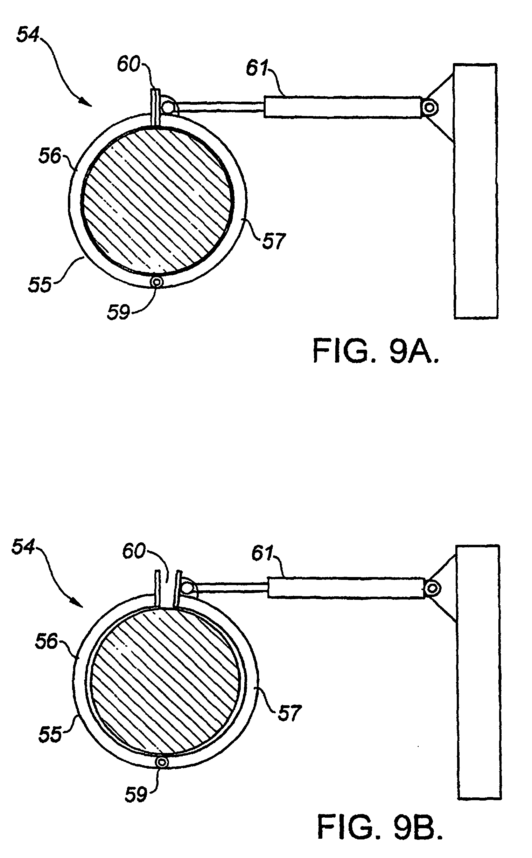

Figures 9a and 9b are cross sectional views of the compactor, depicted in open and closed positions;

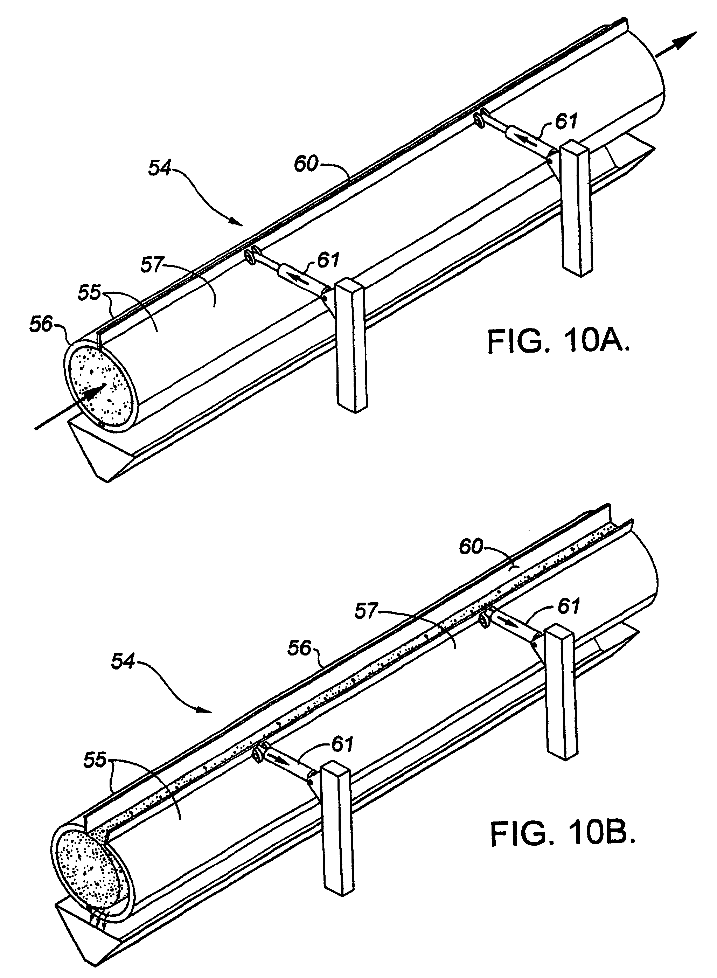

Figures 10a and 10b are perspective views of the compactor, depicted in open and closed positions;

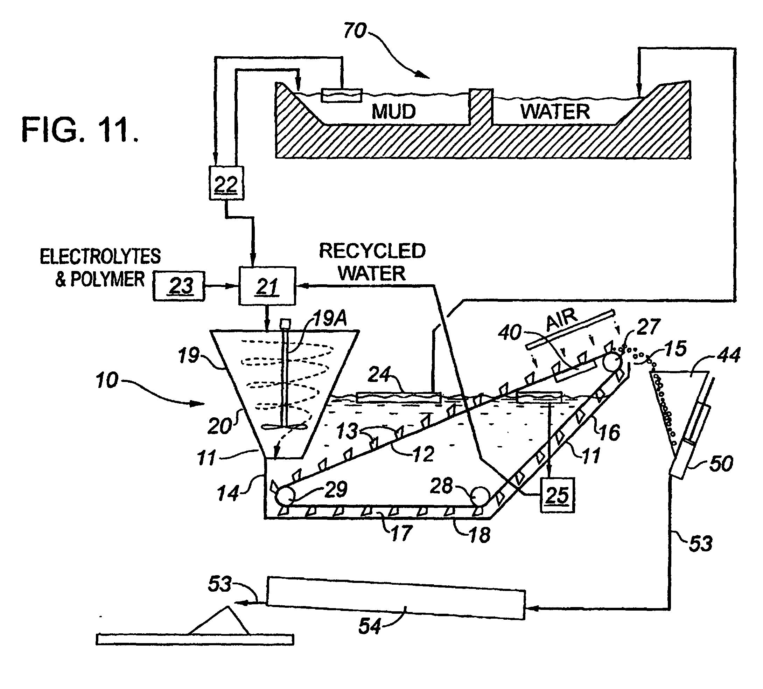

Figure 11 is a schematic view of an embodiment of the present invention as applied to a pre-existing drilling fluids sump; and

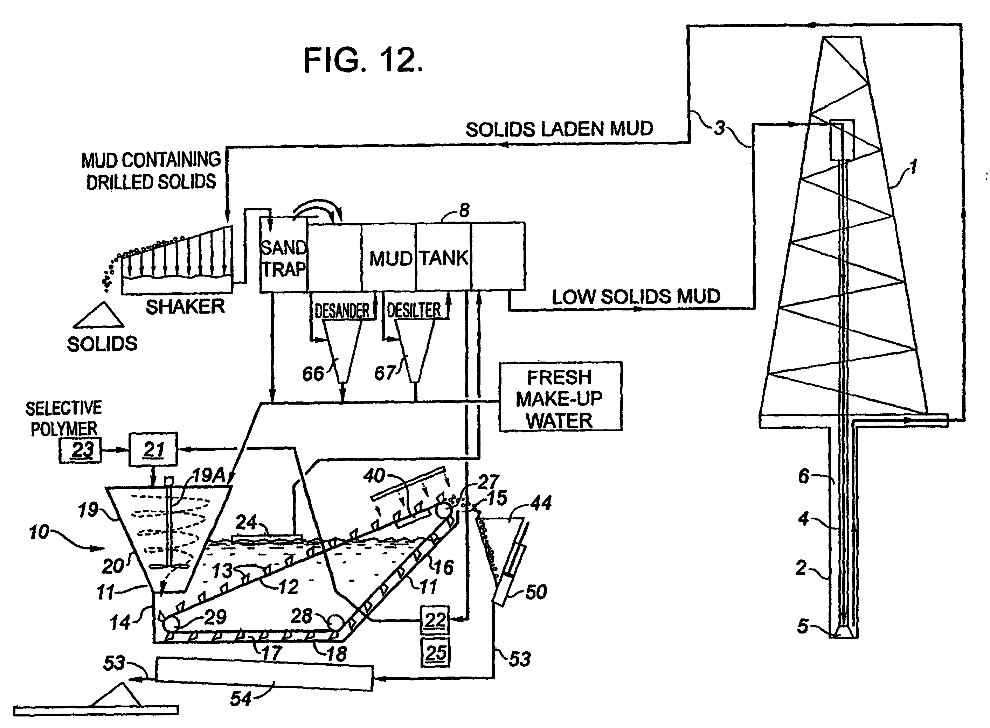

Figure 12 is a schematic view of an embodiment of the present invention as applied to selectively flocculate drilling fluids.

### DETAILED DESCRIPTION OF THE PREFERRED EMBODIMENT

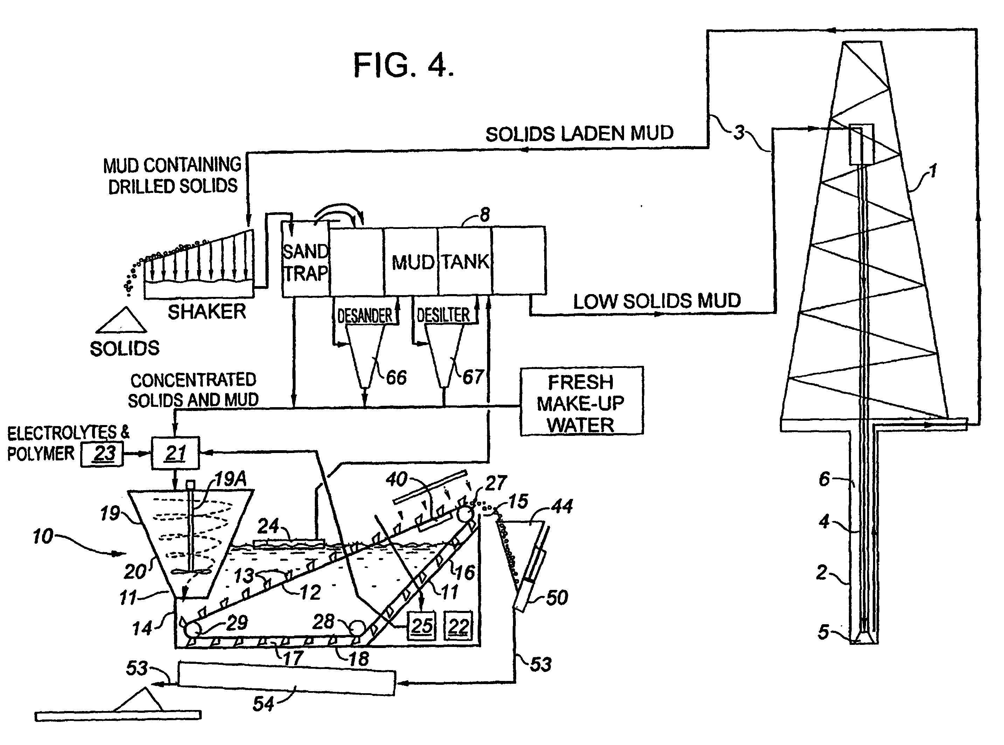

Having reference to Fig. 4, a conventional oil well drilling rig 1, positioned over a well 2, is shown. A mixture of a carrier liquid and additives (such as bentonite clay), known as drilling fluid or mud 3, is circulated to the rig 1 and down into the well 2 through tubular drilling string 4 to a drilling bit 5. Hydrocarbons, such as diesel, may be used as the carrier liquid; the resulting fluid being referred to as "invert muds" However, the description of the preferred embodiment as follows refers to the use of water as the carrier liquid.

Mud 3 containing solids is circulated back to the rig 1 via the annular space 6 between the subterranean wall of the well 2 and the drill string 4, for discharge at the surface. The returned mud 3 is conditioned at ground surface to remove solids. More particularly, clarified mud is recycled to a mud tank 8 of an active mud system for the addition of fresh chemicals, mud constituents and make-up water as necessary. Thus conditioned, the mud 3 is recycled to the well 2.

Mud is optimally maintained at liquid densities of less than 9.0 - 9.1 pounds per US gallon (lb/gal) (1078 - 1090 kg/m³). The density of recycled mud is controlled by separating undesirable solid matter from the mud.

Apparatus 10 is provided for continuously separating or stripping solids from the returned mud and recycling clarified liquid back to the mud tank 8. The clarified liquid may consist of mud stripped of undesirable solids or clarified carrier liquid.

The apparatus 10 comprises a settling tank 11 having a solids-bearing liquid inlet end, an endless conveyor 12 carrying a plurality of spaced-apart, screened buckets 13, a solids dewatering section, a substantially dewatered solids discharge and a clarified liquid discharge.

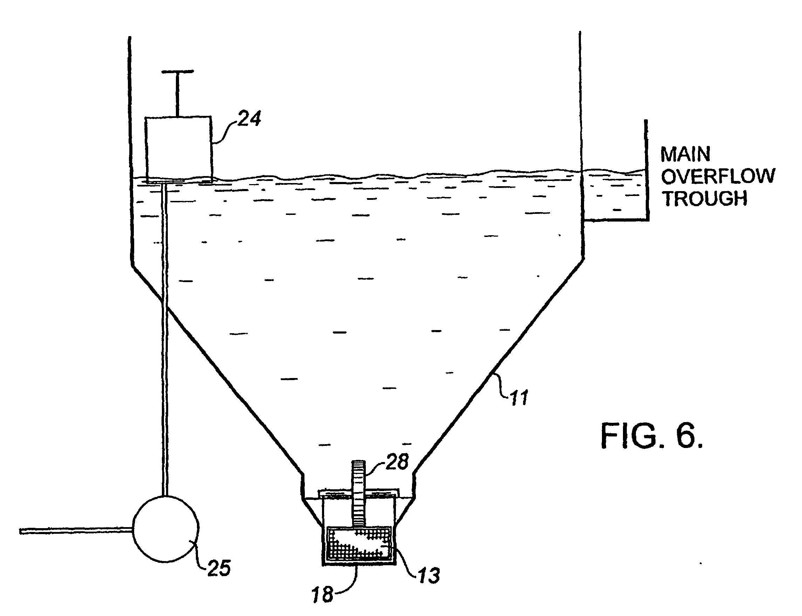

The settling tank 11 is rectangular in plan with a first mud inlet end 14 and a second solids discharge end 15. The tank 11 has a sloping wall 16 at its second end 15 and sloping side walls (Fig. 6) which taper inwardly and downwardly to form a narrow rectangular trough 17 in the tank's bottom 18.

An 8 foot (2.44 m) diameter cone tank 19 extends downwardly into the first end 14 of the settling tank 11 and has a 15" diameter (38 cm) circular discharge adjacent the bottom of the tank 18. The cone tank 19 itself forms the end wall 20 of the first end 14 of the settling tank 11. A mixing tank 21 is located atop and discharges into the cone tank 19.

A flow of mud 3 is directed from the drilling rig to the mixing tank 21 through desanders 66 and desilters 67 or from a dedicated pump 22. A variable speed stirrer 19a in the cone tank 19 imparts circular movement to the liquid residing therein.

Polymer mixing tanks 23 enable preparation of batches of flocculant. Granular, dry polymer is pneumatically transported from hopper, by tube, to mix with the appropriate carrier liquid.

An adjustable overflow weir 24 adjacent the second end of the tank 15 establishes a 6 foot (2 m) deep liquid level in the settling tank 11, establishing a liquid volume of about 4000 gal. (15.14 m³). Pump 25 recycles a flow of clarified liquid, recovered over the weir 24, to the mixing tank for mixing with the mud 3, any fresh dilution water, flocculant and electrolytes. Net clarified liquid production which overflows the weir 24 is preferably directed back to the active system by gravity.

The variable speed conveyor 12, comprising an endless loop of 4" link center x 4.19" wide (101 x 106 mm) link-chain 26, follows a substantially triangular path through the tank.

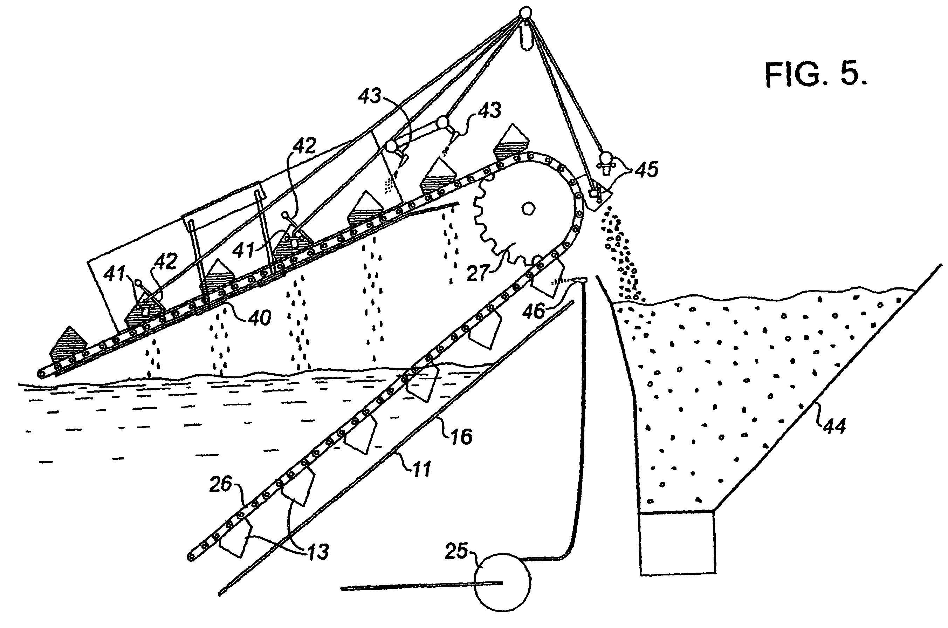

As shown more clearly in Fig. 5, the buckets 13 are affixed to the chain 26, spaced about 12-15 inches (30.5 x 38.1 cm) apart along its 30 - 40 foot (9.1 - 12.2 m) length. The buckets 13 extend radially outwardly from the loop of chain 26.

The chain 26 is typically driven at about 1 lineal foot/sec (0.3 m/s) using drive sprocket 27 located at the tank's outlet end 15, above the tank's liquid level. The chain 26 descends parallel to the sloping end wall 16, entering the liquid in the tank 11. Buckets 13 depend downwardly from the chain 26 and advance substantially parallel to the sloping end wall 16. A guide sprocket 28 located at the bottom of the sloping end wall 16 turns the chain 26 so that the buckets 13, which now depend downwardly, follow a path parallel to and contacting the tank's bottom 18. The tank bottom 18 preferably has inserts made of Teflon to minimize wear to both the tank 11 and buckets 13. A 10" (25.4 cm) diameter tail sprocket 29, located at the base of the first end wall 14 turns the chain 26 almost fully about to return, along a protracted, diagonally upward path through the liquid to the head drive sprocket 27. On the ascent, the buckets 13 extend upwardly from the chain 26. The chain exits the liquid adjacent the second end 15 to complete the loop and round the head sprocket 27.

In other words, the endless conveyer 12 guides the buckets 13 from the head sprocket 27, on an angled descending path into the liquid paralleling the sloped end wall 16, a horizontal path along the tank bottom 18, and finally along an ascending, diagonal path from the bottom of the tank's inlet end 14, back to the head drive sprocket 27 at the second end 15, above the liquid.

Having reference to Figs. 7a - 7d, each bucket 13 defines a right prism volume, having a rectangular 14" wide by 3" tall (35.6 x 7.6 cm) backing wall 30, a leading rectangular 8" tall x 14" wide (20.3 x 35.6 cm) opening 31 and substantially trapezoidal 8" deep (20.3 cm) side walls 32. Each bucket is constructed of a skeletal framework 33 which supports screen material 34. Other than the side screens 34a, each top, back and bottom screen is formed of a unitary elongate rectangular screen 34b and skeletal frame 35 which is quickly installed by conforming the screen to the "U" shape bucket and is secured therein with quick release pins 36 extending across the bucket opening 31. The passing size of screen 34 varies between 12 - 80 mesh (1680 - 177 µm). Each bucket is removably connected by bolts to a mounting bracket formed in a link of the chain.

The discharge of the cone tank 19 is positioned adjacent the bottom of the tank, just above the opening of the buckets 13 as they round the tail sprocket.

Once the ascending portion of the conveyor emerges from the liquid, the chain 26 and buckets pass through a dewatering section comprising a vibrating table 40 and air nozzles. The chain and buckets are guided over the table 40 and support their weight to maximize energy transfer. A Teflon surface (not shown) minimizes wear.

Having reference once again to Fig. 5, air nozzles 41 blast streams of air through the screens on the sides of the buckets. An array of stationary rubber flaps 42 depend downwardly into the path of the buckets, temporarily blocking the bucket openings as they advance across the vibrating table. The side air nozzles 41 are a vortex type which induce and amplify air flow from a 50 psi (345 kPa), 20 scfm (0.0094 m³/s) source to discharge air at 370 scfm (0.1746 m³/s). Such side vortex nozzles 41 are available as Trans-Vectors model 913 from CFM Air Limited, Calgary, Alberta.

One or more banks of air vortex nozzles 43 (two banks shown, four nozzles per bank), in-line with the conveyor, blast high velocity air into the openings 31 of the buckets 13. Each in-line air nozzle provides about 80 scfm (0.0378 m³/s) using an air source of 4.5 scfm (0.0021 m³/s) at 50 psia (345 kPa). Such vortex nozzles are available as Trans-Vectors model 901 from CFM Air Limited, Calgary, Alberta.

The buckets 13 are inverted over the head sprocket 27 and dump their solids contents into a discharge hopper 44 located outside the tank.

An additional bank of four in-line and two side 370 scfm (0.1746 m³/s) air vortex nozzles 45 are directed to blow air through the screens 34 from the outside of the buckets 13, dislodging substantially any remaining solids from the screens.

Nozzles 46 spray the outside of the buckets once they are descending once again into the tank 11. The nozzles 46 are supplied from the clarified liquid pump. The clarified liquid pump 25 or a dedicated pump 22 can also be used to supply wash bars (not shown) to aid in washing down the tank at the conclusion of operation. A port (not shown) at the bottom 18 of the tank may be opened at the conclusion of operation to swamp out remaining solids and liquid.

As shown in Figures 4 and 8, a 12" x 12" (30.5 x 30.5) plunger pump 50 with a roughly 2 foot (61 cm) stroke, similar to that known for pumping sewage, is located at the base of the discharge hopper 44. When plunger 52 is retracted, a cavity 51 in the pump 50 is opened to the base of the hopper, permitting solids to flow into and charge the pump. On the forward stroke, the plunger 52 displaces the solids charge, pushing it forwards. The pump generates about 60 psi (413 kPa) of pressure, sufficient to deliver the solids product through a 200' (61 m) long, 4" (10.1 cm) diameter discharge line 53. A flow valve 71 isolates the discharge line to prevent backflow on the pump's backstroke.

A rigid length of conduit, or compactor 54, is fitted into the discharge line 53. The compactor comprises a 12 foot long (3.7 m) length of 10" diameter (25.4 cm) cylindrical pipe 55 split in half longitudinally, forming two hemi-cylinders halves 56,57. The halves 56,57 are hinged along one split side 59. The opposing split side 60 is oriented to face upwardly. The upper split 60 is mechanically locatable, using hydraulic cylinders 61, between a sealing, pressure-containing closed position (Fig. 9a, 10a - maintained during the plunger pump's forward pressurizing stroke) and an upper split open, pressure releasing position (Fig. 9b,10b - maintained during the pump's backstroke - when the pressure reduces). The compactor 54 is located above the settling tank 11 for permitting any reclaimed water to gravity drain into the settling tank 11.

The apparatus 10 is wholly mounted on a trailer for ease of transport to a drilling site.

Using the above apparatus, novel separation processes may be practised.

As described previously, a critical aspect of maintaining efficient well drilling operations is to control the accumulation of undesirable ultrafines in the drilling mud. Particularly as the drilling deepens, and after mud-up, undesirable ultrafines quickly accumulate and can cause detrimentally high mud densities.

Accordingly, in a first embodiment, the preferred separation process comprises treating solids-concentrated water-based drilling fluids using flocculation and the apparatus of the present invention.

More specifically, as applied to water-based drilling fluids returning from a well, the apparatus is operated in the following manner.

Referring again to Fig. 4, a liquid level of 4000 gal. (15.14 m³) of clear water is established in the tank 11. Thus, the starting viscosity of the tank's liquid is low.

Basically, the Canadian oil field practise is to measure the viscosity with a Marsh Funnel. The Marsh Funnel Standard, operated on water, should be 26 sec/quart ±0.5 sec at 70°F ±5°F. The measurement is defined as the time required for the fluid to pass through a Marsh Funnel and fill a 1 quart reservoir (946 ml). The Marsh Funnel is a cone, 6 inches diameter at the top and 12 inches long (152 mm x 305 mm). At the bottom, a smooth bore tube 2 inches long (5 mm), 3/16 inch inside diameter (4.8 mm), is attached without constriction. A 1/16 inch (1.6 mm) opening wire screen covers one/half of the cross-section of the funnel, at a funnel volume of about 1500 ml.

The low viscosity of the initially clear water aids in settling of contained solids. Dirty drilling fluids, or mud, are drawn from the sand trap 65 and are processed through desander 66 and desilter 67. Overflow from the desander/desilter 66,67 is recycled back to the rig's tanks 8. The concentrated underflows, 5 - 10 gpm (18.9=37.9 l/min) from the desander 66 and the 3 - 5 gpm (11.4-18.9 l/min) from the desilter 67, are directed to the mixing tank 21. Any solids which accumulate in the sand trap are also directed to the mixing tank. Pump 25 recycles about 40 - 50 gpm (151-189 l/min) of clarified water to the mixing tank 21 to further promote settling.

When the solids content is no longer sustainable, enhanced polymer flocculation is practised to aid in separating the undesirable ultrafines. The exact nature of the flocculant and electrolytes may vary and is known to those skilled in the art. In the polymer mixing tanks 23, a flocculating solution is prepared, including appropriate electrolytes, such as calcium nitrate. Gypsum or other salts are added as necessary to harden the flocculating solution. Polyacrylamide polymer is added for inducing formation of floc.

Typically 1/10 - 1/20 pound/barrel (lb./bbl) (0.38 - 0.19 kg/m³) of polyacrylamide polymer and 1.0 - 2.0 lb./bbl (3.8 - 7.6 kg/m³) of gypsum or calcium nitrate is required to form flocs which can be readily handled by the above apparatus. The exact concentrations will vary according to the solids content, the density and the viscosity of the mud. Therefore, as these parameters vary, the quantities of polymer and electrolyte are adjusted accordingly.

An additional 5 - 10 gpm (18.9 - 37.9 l/min) of fresh water is added to compensate for the increasing volume of the well (volume building) and to make up for evaporative losses. This additional water dilutes the incoming liquid and improves settling.

Solids, including any formed floc, are then discharged from the mixing tank 21 into the cone tank 19. The stirrer 19a induces the mud to spin, urging and concentrating solids at the cone walls prior to discharge from the cone's bottom 18. The stirrer 19a is idled at a slow 20 rpm to avoid degradation of flocs.

As described above, chain 26 slowly carries the screened buckets 13 continuously on a triangular path though the tank 11. During the descending leg of each bucket's journey, the bucket travels diagonally downwards, initially intercepting any solids floating on the surface. The bucket continues downwards, traversing a cross-section of the liquid, filtering and collecting suspended solids.

The screens 34 of the buckets are designed to allow the screen to filter the tank's liquid contents. Relatively coarse screens are utilized in the buckets, typically 12 - 20 mesh (1680 - 841 µm), appropriate for the large floc, finer screens of 40 - 80 mesh (420 - 177 µm) when processing whole mud.

As each bucket traverses the suspended solids in the liquid, the screens progressively plug off (establish a filter cake) reducing the effective screen mesh opening and thereby filtering and collecting ever finer particles.

Along the horizontal bottom leg, the buckets dredge the bottom 18 of the tank 11 to collect solids which have settled.

On the ascent, the buckets 13 round the tail sprocket 29 and assume a solids-carrying orientation with their openings facing substantially forwards and upwardly. Mud discharged from the cone tank 19 has a downward trajectory and the buckets rounding the tail sprocket have an upwards trajectory. The opposing movement results in a differential pressure being formed across the bucket screens, improving the filtering of mud directly from the cone tank. The buckets 13 continue travelling diagonally upwards through the liquid, filtering suspended solids. The angled ascent prolongs the bucket's contact with the liquid. As the buckets leave the liquid, they intercept any additional floating solids.

The solids collection capability of the buckets is significant, being a factor of the conveyor speed, the bucket spacing and the screen capacity. For example, at 20 gpm (757 l/min) of incoming liquid into a 4000 gal. (15.14 m³) tank, any associated solids have a residence time of 200 minutes or 3.33 hours. Using 28 buckets spaced on a 35 foot (10.7 m) loop of conveyor advancing at about 1 bucket/sec (about 1.25 feet/s or 38 cm/s), nearly 12,000 bucket screens are exposed to the suspended and settled solids. Even a very thin filter cake, collected upon 200 square inches (1290 cm²)of filtering area, times 12,000 passes, removes significant quantities of suspended solids.

The collected solids are then dewatered in a series of steps which commence once the conveyor lifts the solids-laden buckets free of the liquid.

Table 40 is vibrated at about 30 Hz to free residual water from the solids. The vibration imparted is sufficient to free interstitial water and yet is not so vigorous as to breakdown any aggregations, such as any flocculated solids. Liberated water runs out through the screens 34 in the bucket.

Blasts of air from the side nozzles 41 assist in dewatering by clearing the side screens 34 for ready passage of liberated water. The rubber flaps 42 aid in retaining solids within the buckets 13 during the air blasts of air.

During or after the vibration stage, the in-line air streams from nozzles 43 massage the contained solids, releasing more water to drain out of the buckets. In some instances accumulated filter cake is displaced, lifted or curled back from solids-supporting screen 34, more readily enabling water to pass therethrough.

The results of the dewatering step on flocculated solids is dramatic. The depth of floc within the buckets tends to reduce to about 1/4 their previous loft; the decrease in volume being due to the release of water which returns to the tank.

After this dewatering stage, as the chain 26 and buckets 13 round the head sprocket 27, the openings 31 in the buckets 13 tip over to dump accumulated solids into the discharge hopper 44. The additional bank of six air jets 45 dislodge substantially all remaining solids from the screens which also fall into the discharge hopper 44.

The resulting 15-25 gpm (56.8 - 94.6 l/min) of clarified liquid or water is decanted from the surface of the liquid, flows over the weir 24 and is recycled to the active system mud tank 8 for reconstitution of fresh mud for recycling downhole.

As the buckets again descend, water spray 46 thoroughly washes the buckets 13 of any minor residual amounts of solids which return to the tank 11.

At this point, the solids are substantially dewatered and may be discharged directly to storage. Should remote storage be desired, the solids are routed through the plunger pump.

The plunger pump 50 and compactor 54 provide an additional dewatering step. Referring to Fig. 10a, on the forward stroke of the pump 50: the compactor is in the closed position; the line pressure increases; and compaction occurs. The pressure causes water to separate from the solids. Then, referring to Fig. 10b, the compactor's upper split 60 is opened and liberated water trickles free to drain into the settling tank 11.

At this stage the discharge from the buckets is sufficiently dewatered to stack and can be handled by a front-end loader for disposal by land farming and the like.

The above embodiment is demonstrated in the illustrative examples and by reference to Fig. 11 as follows.

### Example I

At a drilling site in western Alberta, Canada, 2000 feet (610 m) of 13-3/4" (350 mm) surface hole was drilled and 9-5/8" (245 mm) casing was run and cemented. The mud density was controlled in the 9.0 lb/gal (1078 kg/m³) range by employing the drilling rig's shaker and desilters. The sand trap and desilter underflow were dumped to a series of sumps. Floc water drilling of 8-3/4" (222 mm) main hole was employed to 5000 feet (1524 m) utilizing gypsum, calcium nitrate and flocculating polymer. The well was then "mudded up" to a gel mud system, by adding bentonite and polymers. Polymer flocculation was continued of mud in the sump. Drilling continued to 6500 feet (1981 m).

By the time the apparatus of the invention was placed into operation at 6500 feet (1981 m), the sump had accumulated over 3000 barrels (360 m³) of mud and sludge. Drilling continued to 8000 feet (2438 m) while the apparatus of the invention processed the sump contents.

The apparatus drew sump contents from a 4" (10.2 cm) floating suction in the sump. A water cannon assisted in loosening settled solids for removal by the floating suction. The apparatus processed 40-80 gpm (151 - 303 l/min) of the sump contents comprising floc solids, whole drilling mud and solids-laden desilter underflow.

Enhanced polymer flocculation was practised, using 1/20 pound of polyacrylamide polymer per barrel of mud processed (0.19 kg/m³). The calcium content or hardness of the floc water was maintained at 600 ppm using calcium sulfate and calcium nitrate.

The conveyor was operated at about 60 feet/min (18.3 m/min). The buckets employed 20 and 40 mesh (841 and 420 µm) screens. At peak processing, over 50 gpm (189 l/min) of dewatered solids were discharged for removal to an above-ground, bermed area by front-end loader. Clarified water was recycled to the far, discharge end of the sump where the rig's own 2" (5 cm) suction pump returned this water as dilution water to the active mud system to assist in lowering the mud density.

Drilling densities of 8.9 - 9.0 lb/gal (1066- 1079 kg/m³) were achieved which assisted in the fast drilling penetration rates. The well was drilled in a record time of 31 days.

The apparatus processed the entire sump's contents. The apparatus was then removed from the system, leaving about 1000 barrels (119 m³) of clarified water which was sufficient volume building inventory for re-use and permitted the rig to drill to total depth of 9600 feet (2926 m).

At the conclusion of the drilling, the rig mud tanks contained an additional 400 - 500 barrels (48 - 60 m³) of whole mud which were dumped into the sump and required only a minor mix, bury and cover reclamation operation.

### Example II

At another drilling site in southern Alberta, Canada, a drilling rig utilized a shaker screen, centrifuge and a sump. Due to the experimental nature of the apparatus, the operator was more comfortable having the apparatus draw from an intermediate sump rather than be coupled directly to the rig's active mud system.

Surface hole had already been drilled to 1200 feet (366 m) and the shaker, desilter and centrifuge wastes had been dumped into a two-part sump. Midway along the sump, the surface hole-drilled contents of the first sump part were de-watered by the apparatus and decanted into the second part. The drilling wastes were drawn from the first end of the sump and processed through the apparatus. Clarified liquid was discharged to the sump's second end and ultimately recycled to the rig.

Water drilling from 1200 feet (366 m) then commenced. The shaker sand trap was dumped to the feed end of the sump every 2 or 3 drill string connections. The apparatus was employed to process the existing sump contents and the additional sand trap contents produced during drilling. The apparatus used enhanced polymer flocculation to optimize ultrafines removal, drawing from the sump's feed end and discharged clarified liquid to the sump's discharge end. The rig's own pump drew the clarified water and returned it to the active mud system.

More particularly, prior to drawing feed for the apparatus, flocculant was added to the sump feed end in a concentration of 1/20 pound of polyacrylamide polymer for each barrel of liquid drawn (0.19 kg/m³). Calcium levels of 400-600 ppm were maintained with the addition of calcium sulfate and calcium nitrate. Minimal volumes of liquid were maintained in the sump and when all of the water was recycled to the active system (the sump being essentially dry), additional water had to be imported for make-up volume building, any losses, and to aid in maintaining suction for drawing solids into the apparatus.

Once the sump was dry, the apparatus was operating in a manner equivalent to processing mud directly from the rig's active system.

The bucket and conveyor were operated at a 60 lineal feet/min (18.3 m/min) with 40 mesh (420 µm) screens. The vibrator table was operated at 30 Hz. The dewatered solids discharge weighed 10.8 to 11 lb/gal (1294 - 1318 kg/m³) at discharge rates of 30-35 gpm (113 - 132 l/min).

The well was drilled to 6800 feet (2073 m) in 12-1/2 days, maintaining 8.9-9.0 lb/gal (1066-1079 kg/m³) to the total depth.

Benefits were realized beyond merely maintaining low drilling mud weights. Due to the minimal storage of liquid in the sump, the consumption of calcium electrolytes and polymer flocculant was reduced. Further, reduced polymer could be used, resulting in softer, more fragile floes. The screens buckets successfully recovered the soft flocs which would not survive the centrifuge process; centrifuges requiring more tightly bound flocs. Flocculant and electrolyte use was only about 1/3 of that used as compared to similar centrifuge-based operations drilled in the same locale and to the same depth range.

In a second embodiment, shown in Fig. 12, selective flocculation may be successfully practised, wherein flocculant may be added to the mixing tank 21 for the flocculation of undesirable ultrafine drilled solids, but preferentially does not flocculate bentonitic solids. Stirrer 19a is slowly rotated and floc forms in the relatively quiescent conditions in the cone-tank 19. The variable speed conveyor 12 is slowed to minimize disturbance in the tank 11. The light floc is gently collected by a combination of dredging and the filtering by the screened buckets 13. Vibration of the dewatering table 40 is minimized to avoid degradation of the floc back into water and ultrafines. Air blasts are minimized and sizes of the screens 34 are adjusted for optimal filtering of the light floc. Clarified bentonitic mud overflows weir 24 and is recycled back to the active system.

In another embodiment, again illustrated in Fig. 12, the performance of the process is improved by recognizing that solids which have been concentrated, such as by hydroclones, are favourably predisposed to settling. There is little advantage in flocculating such concentrated solids. Accordingly, while a stream of mud is directed to the mixing tank 21 and mixed with a selective flocculant, a second solids-concentrated underflow stream from hydroclones 66, 67 is advantageously directed to the tank's bottom 18 where it is dredged immediately by the screened buckets 13. While one may provide a separate conduit to the tank's bottom 18, it is preferable to merely divert the hydroclone stream, which may discharge into the mixing tank, instead to enter the cone tank 19 at its periphery. The centrifugal action in the cone tank 19 aids in maintaining segregation of coarse solids, which remain against the tank's wall, and the lighter ultrafine solids and flocs, which tend to remain in middle of the tank Therefore, by short-circuiting coarse solids directly to the tank's bottom for recovery by dredging, flocculant is not consumed unnecessarily.

To summarize briefly, the present invention provides an environment in which those solids which settle can be recovered by dredging and those solids which do not settle can be recovered by filtering. The filtering can be affected by the speed and size of the screens. The cut point can be manipulated. Factors which affect the cut point for solids which settle, and those which do not, include: the concentration and nature of the solids; the rate at which solids-laden liquid is processed in the apparatus; the density of the solids-containing liquid and the liquid in the apparatus; and whether flocculation is practised.

In yet another embodiment, it can be seen that the apparatus can be conveniently adapted to operate in several stages, operating first as a washer and screening unit and subsequently and periodically, applying the method of the invention to successfully deal with the collected ultrafines. More particularly, a stream of clarified water from the settling tank is recycled to the first end of the apparatus for co-mingling and washing a stream of coarse solids (like sand or gravel) which are contaminated by the presence, or a coating, of ultrafine solids. Ultrafine-free solids (washed or clean solids) are conveyed out of the apparatus in coarse-screened buckets while the ultrafines collect and become suspended in the tank water. Then, as described previously, once the quantity of ultrafines reaches a certain level, then flocculant may be added for practising the method of the invention whereby floc is formed, floc is collected in the buckets and is dewatered for collection. This two-stage embodiment permits the cleaned solids to be collected separately from the periodic ultrafine floc product.

Clearly, the invention is not restricted to the aforementioned embodiments. Reasonable variations and modifications will be apparent to one skilled in the art. For example, the separation of settled and suspended solids is clearly a problem which appears in other industries such as sewage treatment digester solids. Mineral processing industries like mining, gravel washing, and soil remediation and pulp and paper industries face restricted water use and problems with ultrafines buildup.

Application of the process and apparatus on the invention to ultrafine solids other than drilling muds is illustrated in Example III. Reference is again made to Figure 11, as treating sewage from sumps instead of mud.

### EXAMPLE III

At sewage settling ponds for the City of Calgary, Alberta, Canada, the apparatus of the invention processed the effluent from the city's sewage treatment plant digesters. The digester liquid sewage effluent was first piped to settling ponds. The sewage was allowed to settle in a progressive series of eight lagoons or sumps (containing 2.5 million barrels or 300,000 m³ of fluids). Conventionally, the solids content of the final lagoon concentrated to about 9 - 12% and was pumped off by vacuum truck for distribution on farmer's fields.

The top three feet (1m) of slurry in the lagoons is the slowest settling and contained about 1 - 2% of ultrafine organic solids which have a low specific gravity. The slurry was processed by the invention.

About 40-60gpm (151-227 l/min) of slurry was successfully processed using the apparatus and practising enhanced polymer flocculation. Clear water was produced and directed back to the lagoon. Dewatered flocs were dumped into a dry sump storage. The settling tank liquid was maintained at 600-100mg/l soluble calcium (using commercial grade calcium sulphate) and a cationic flocculant (trade names Percol 787 and Percol 757) available from Allied Colloids (Canada) Inc., Calgary, Alberta.

Returning to application to drilling muds, as described in the background, conventional well drilling operation, like sewage treatment or pulp and paper applications, is characterised by various stages having differing solids-separation demands. An advantage of the present invention is a flexibility of operation which enables adaptation to such variations.

More particularly, for the preferred embodiment of separating solids from drilling fluids, the typical stages of drilling a well include: drilling of surface hole, first with mud and then drilling the next section with clear water for fast penetration; mudding-up to facilitate deeper drilling; and then finally, clean up of the final inventory of mud remaining in the rig's tanks. For effective separation of solids, each stage requires differing emphasis

Initially, the entire flow of whole mud can be directed to the mixing tank 21. The screened buckets filter the tank's contents and dredge settled solids. Until the ultrafines become a problem, flocculation is not practised. As the solids concentration climbs, a slipstream of mud from the rig can be routed through hydroclones, the concentrated underflow being directed to discharge adjacent the tank's bottom, preferably down the wall of the cone tank. As the solids concentration climbs yet further, enhanced polymer flocculation is practised, aiding in the settling and filtered capture of the ultrafines.

After placing surface casing, it is conventional to proceed with water drilling and not add mud until difficulties are encountered in conveying the solids to the surface. Without mud, the liquid viscosity is typically lower and high throughput rates may be achieved. Flocculation is practised at the commencement of water drilling to forestall build up of the ultrafines concentration.

Once the drilling deepens, the character of the drilling fluid is deliberately altered including increased viscosity using bentonite and/or polymers to better convey solids to the surface. This is colloquially referred to as "mud up". This stage of drilling is characterised by increased ultrafine loading and also being the stage of operation which is the most challenging for centrifuges. While processing desander and desilter underflow, the apparatus can be run in three progressively more aggressive process stages: first running the cone tank stirrer at higher speed and using 40 - 60 mesh (420 - 250 µm) bucket screens for filtering ultrafines; second, diluting the incoming mud with clarified water to promote improved settling, and finally, when the mud density can no longer be controlled, initiate enhanced polymer flocculation, preferably by starting with a settling tank of fresh water.

At the completion of drilling, the active mud tank system is usually filled with solids-laden mud. Similarly, should a drilling operation have resulted in the creation of a sump, as described above, the contents must be separated into its clear water and solids constituents for economic disposal. The entire contents of the mud system of sump can be processed, removing solids from the liquid and returning clarified water to the rig tanks or sump. Eventually the sump contains clarified water for disposal and dewatered solids are stockpiled. Environmental approvals are readily obtained for disposal of the large volume of substantially clear water, occasional adjustment of the pH being required.

In yet another embodiment, for the treatment of weighted muds, such as those using barite, it is desirable to first recover barite solids and secondly to reject ultrafines. More particularly, this may be accomplished by reducing the liquid's viscosity to about 35-40 sec/quart (Marsh Funnel) to settle the barite solids and dredging them using the screened buckets, recycling them to the active system. Once barite is recovered, the undesirable low and high gravity ultrafines are treated by flocculation for filtering of the resulting floc, rejection of the undesirable solids and recycling of clarified water to the active system

In yet another embodiment, though the above is described with respect to water-based muds, the filtering and collection of settled solids from invert muds is performed in an equivalent manner, including adding diesel as required for volume building and additionally obtaining the benefits of improved settling as the fresh diesel flows through the apparatus. Note that a flocculation step is not practised with hydrocarbon-based muds.

## Claims

1. A process of separating solids from liquid, the process comprising:
(a) providing a settling tank (11) having sides, a bottom (18) and first and second ends (14,15);
(b) flowing liquid containing suspended solids into the tank (11);
(c) maintaining a liquid level in the tank (11);
(d) allowing a coarser portion of the suspended solids to settle by gravity onto the tank's bottom (18),whilst a finer portion of the suspended solids remain in suspension;
(e) continuously advancing a plurality of spaced-apart screening means (13) having a sizing that permits liquid and the finer portion of the suspended solids to readily pass, whilst the coarser solids cannot, along an endless path to collect the settled solids by
• descending the screening means into the tank's liquid from a first point (27) above the liquid to a second point (28) on the tank's bottom (18), liquid and finer solids in suspension passing readily through the screening means;
• advancing the screening means laterally to a third point (29) on the bottom unique from the second point (28), the screening means (13) collecting by dredging gravity settled coarse solids which cannot pass therethrough; and
• ascending the screening means (13) bearing coarse dredged solids so as to return back to the first point (27);
(f) substantially dewatering the collected solids and vibrating the screening means (13) which lay along the ascending portion of the path and are above the liquid level;
(g) inverting the screening means (13) for recovery of collected solids at the first point (27) external to the tank (11); and
(h) withdrawing clarified liquid from the tank (11) at a point (24) adjacent the surface of the liquid;
**characterised by**:
in the step (b), flowing the liquid containing suspended solids into the tank's first end (14);
in the step (e), the first point (27) is above the liquid at the tank's second end (15); the third point (29) is adjacent the first end of the tank (14); and the screening means (13) bearing coarse dredged solids are ascended through a diagonal and prolonged path through the liquid back to the first point (27) so that suspended finer solids are collected by filtering them from the liquid through the formation of a filter cake of the coarse solids, the remaining liquid becoming clarified, the collected solids and screening means (13) exiting the liquid adjacent the second end (15);
in the step (f), additionnally dewatering the collected solids by directing air blasts (45) onto the screening means (13);
in the step (g), directing air blasts (45) onto the screening means (13) to assist recovery of collected solids; and
in the step (h), withdrawing the clarified liquid from the second end (15) of the tank (11).

2. The process as set forth in claim 1 wherein, in the step (b), the liquid containing suspended solids is flowed into the tank (11) adjacent the tank's bottom (18) at its first end (14).

3. The process as set forth in claim 2 wherein the step (b) comprises mixing clarified liquid with the liquid containing suspended solids flowing into the tank (11).

4. The process as set forth in claim 3 wherein at least a portion of the clarified liquid in step (b) mixed with the liquid containing suspended solids flowing into the tank (11) is recycled from the clarified liquid withdrawn from the second end (15) of the tank in step (h).

5. The process as set forth in claim 4 wherein the step (c) comprises changing the sizing of the screening means (13) so as to alter the fraction of suspended solids which are dredged from the tank's bottom (18) versus those filtered from the liquid.

6. The process as set forth in claim 4 wherein the step (b) comprises first flowing the liquid containing suspended solids into a cone-shaped vessel (19) having downwardly converging walls and a lower discharge, said vessel (19) being positioned so that its discharge is located below the liquid level at the tank's first end (14), adjacent and above the third point (29), so that liquid flowing into the tank (11) impinges on the ascending screening means (13).

7. The process as set forth in claim 6 further comprising spinning the liquid containing suspended solids within the cone-shaped vessel (19) so that solids in the liquid are urged outwardly for concentrating the contained solids against said converging walls prior to discharging the liquid and concentrated solids downwardly onto the ascending screening means (13).

8. The process as set forth in claim 7 wherein in the step (f) the solids collected on the screening means (13) are dewatered by supporting the screening means (13) upon and advancing them over a vibrating table (40) located above the liquid and before the conveyor (12) returns to the first point (27).

9. The process as set forth in claim 7 wherein the step (e) comprises cleaning the screening means (13) prior to returning to the second point (28) by spraying (46) the screening means with clarified liquid, the washing liquid and any residual solids being directed back into the tank (11).

10. The process as set forth claim 4 wherein in the step (b) the liquid containing suspended solids flowing into the tank (11) is mixed with a flocculant for the aggregation of at least a portion of the suspended solids into floc solids, a coarse portion of the floc solids gravity settling onto the tank's bottom (18) and a finer portion of the floc solids and suspended solids remaining in suspension in the liquid, the coarse portion of the floc and the finer portion of the floc and suspended solids being collected by dredging as the screening means (13) advance between the second and third points (28,29) and the finer suspended solids and non-settled floc being filtered by the solids-bearing as the screening means (13) advance through the liquid between the third and first points (29,27).

11. The process as set forth in claim 10 wherein in the step (f) the collected solids in the form of floc are dewatered by vibrating them on a table (40) at a frequency which is insufficient to release solids from the floc.

12. The process as set forth in claim 11 wherein the screening means are vibrated at a frequency of about 30Hz.

13. The process as set forth in claim 10 wherein the step (b) comprises directing a solids-concentrated stream slip-stream (66,67) of the liquid containing suspended solids to the tank bottom (18) for dredging by the screening means (13).

14. The process as set forth in claim 13 wherein the solids-concentrated stream slip-stream (66,67) of the liquid containing suspended solids is discharged adjacent the wall of the cone-shaped vessel (19).

15. The process as set forth in claim 14 wherein the solids-concentrated stream slip-stream (66,67) of the liquid containing suspended solids is underflow from hydroclones.

16. The process as set forth in claim 7 wherein in the step (b) the liquid flowing into the tank is used drilling mud (3).

17. The process as set forth in claim 16 wherein the mud (3) originates from the mud sump (70) of an oil well drilling rig (1).

18. The process as set forth in claim 16 wherein the mud (3) originates directly from the mud tank (8) of an oil well drilling rig (1).

19. The process as set forth in claim 18 wherein the clarified liquid withdrawn from the second end of the tank (15), is recycled to the mud tank (8) for preparation of more mud (3).

20. A process as set forth in claim 7 wherein in the step (b) the liquid containing suspended solids is used drilling mud (3) from a mud tank (8), the mud containing recoverable beneficial constituents and drilled solids, the process further comprising:
processing the mud in hydroclones to produce a solids-concentrated hydroclone underflow liquid and a clarified overflow liquid;
recycling the overflow liquid to the mud tank (8);
mixing a selective flocculant with the hydroclone underflow liquid and flowing the solids-concentrated underflow liquid and flocculant to the first end (14) of the tank (11), the selective flocculent only aggregating that portion of the fine solids which are drilled solids to form floc so as to avoid substantial aggregation of fine solids which are beneficial constituents of the mud.

21. The process as set forth in claim 1 wherein in the step (b) the solids contained in the liquid flowing into the tank's first end (14) comprise both high-density and low density solids, the high-density solids having both a coarse and a fine fraction, the process comprising:
collecting predominantly coarse high-density solids by dredging, the concentration of finer high-density and low density solids in the liquid being low initially and thus little being collected by filtering, then dewatering and advancing them external to the tank (11);
recovering the collected coarse high-density solids external to the tank (11) and withdrawing a clarified liquid which, over time, contains an increasing quantity of residual solids comprising fine high-density solids and low-density solids, and when the quantity of residual solids collected with the coarse high-density solids becomes too high:
flocculating the residual solids to aggregate at least a portion residual solids form floc;
collecting the floc and residual high-density fine solids and low density solids by dredging and secondly by filtering; and
recovering a clarified liquid and recovering the collected floc and residual solids external to the tank, said collected floc and residual solids being recovered separately from the coarse high-density solids recovered previously.

22. The process as set forth in claim 20 wherein in the step (b) the viscosity of the liquid flowing into the tank (11) is manipulated by commingling with clarified liquid.

23. The process as recited in claim 1 wherein the solids comprise coarse solids contaminated with ultrafine solids and they are recovered separately, the process further comprising:
commingling the liquid containing suspended solids with clarified liquid recovered from the tank (11) for washing ultrafine solids from the coarse solids;
recovering predominantly coarse solids external to the tank (11) by dredging with the screening means (13) and while the concentration of suspended ultrafine solids increases in the tank's liquid;
discontinuing the feeding of liquid containing solids to the tank (11) when the concentration of suspended ultrafine solids filtered with the dredged coarse solids reaches a certain level;
flocculating the suspended ultrafine solids for aggregation of at least a portion of the suspended ultrafine solids into floc having sufficient bulk to facilitate their collection on the screening means while recycling clarified liquid from the tank's second end (15) to its first end (14);
collecting floc and ultrafine solids on the screening means (13) by dredging and filtering;
dewatering the collected floc and ultrafine solids by vibrating the solids-containing screening means (13) which lay along the ascending portion of the path and are above the liquid level and further by directing blasts of air onto the screen contents; and
recovering the dewatered collected floc and ultrafine solids by advancing the screening means (13) to the first point (27).

24. Apparatus for separating solids from a liquid including coarse solids which settle by gravity onto the tank's bottom, and fine solids which remain in suspension, the apparatus comprising:
a settling tank (11) having side walls, a bottom (18), a first end (14) and a second end (15);
a liquid inlet (21) for feeding liquid into the tank (11);
a liquid outlet (24) for maintaining a liquid level in and with drawing clarified liquid from the tank (11);
an endless loop of conveyor (12) which is continuously advanceable along a path from a point external to the tank (11) through the liquid in the tank (11) and back to the point;
a plurality of screening means (13) spaced along the conveyor (12), the screening means (13) being sized so that, when clean, liquid and the fine suspended solids can pass therethrough;
means for guiding the endless conveyor (12) including a first point (27) above the liquid at the tank's second end (15), a second point (28) adjacent the tank's bottom (18), the points guiding the conveyor (12) and the screening means (13) along a path for collecting solids by dredging the coarse gravity settled solids which are unable to pass through the screening means (13)
means (40) for vibrating the screening means (13) which lay along the ascending portion of the path and which are above the liquid level for dewatering of collected solids;
**characterised by**:
the liquid inlet (21) being positioned at the tank's first end;
the liquid outlet (24) being positioned of the tank's second end;
the means for guiding the endless conveyor (12) including at least third point (29) positioned adjacent the bottom (18) unique from the second point and adjacent the tank's first end (14), the at least three points (27,28,29) guiding the conveyor (12) and the screening means (13) along a path for collecting solids between the second and third points (28,29) and secondly between the third and first points (29,27) for ascending to traverse the liquid along a diagonal and prolonged path to collect the fine suspended solids by filtering through the dredged coarse solids before exiting the liquid;
means (43) for directing a stream of air onto the contents of the screening means for further dewatering the collected solids;
means (45) for directing air into the back of the screening means (13) for cleaning residual solids therefrom and dumping them external to the tank (11) when the screening means are inverted over a point (27) for recovering a dewatered solids product.

25. A separation apparatus as claimed in claim 24 wherein the tank's side walls slope inwardly towards the bottom, funnelling solids which settle towards the path of the conveyor (12) and screening means (13) as they advance along the tank's bottom.

26. A separation apparatus as set forth in claim 25 wherein the screening means (13) comprise spaced concave buckets, each bucket having walls (30,32) forming a volume which has an opening (31) facing the direction of conveyor advance and the bucket walls (30,32) are formed of screen material 34, said buckets (13) extending radially outwards from the conveyor so as to depend downwardly from the conveyor while descending and advancing along the tank bottom between the second and third points (28,29) and to stand radially upwardly from the conveyor when ascending between third and first points (29,27).

27. A separation apparatus as set forth in claim 26 wherein the liquid outlet (24) comprises a weir over which clarified water flows.

28. A separation apparatus as set forth in claim 27 wherein the endless conveyor (12) comprises a parallel link chain (26) with the screening means (13) extending therebetween and the first, second and third points (27,28,29) being sprockets, one of the sprockets being driven and the other two being idler sprockets.

29. A separation apparatus as set forth in claim 28 wherein the sprocket at the first point (27) is positioned such that when the buckets (13) round the sprocket, the buckets (13) project outwards and invert at a point (44) external to the tank (11) for dumping collected solids.

30. A separation apparatus as set forth in claim 29 wherein each bucket (13) defines a right prism volume, having a rectangular backing wall (30), a leading rectangular opening (31) and substantially trapezoidal side walls (32), each wall formed of replaceable screening material (34).

31. A separation apparatus as set forth in claim 30 further comprising:
means (44) for collecting the recovered solids; and
means (50) for advancing the recovered solids to a discharge location remote from the settling tank (11).

32. A separation apparatus as set forth in claim 31 wherein the recovered solids advancing means (50) further comprise means (54) for cyclically subjecting the solids to compression and decompression, so that during compression, additional water is separated from the solids to collect along the interface of the solids and a pumping means, and during decompression, the liquid drains free of the solids whereby the solids are further dewatered before discharge at the remote location.

## Patentansprüche

1. Verfahren zur Abtrennung von Feststoffen aus Flüssigkeit, welches Folgendes einschließt:
a) Vorsehen eines Absetzbehälters (11) mit Seiten, einem Boden (18) und einem ersten und zweiten Ende (14, 15);
b) Einlaufen von Flüssigkeit mit darin suspendierten Feststoffen in den Behälter (11);
c) Aufrechterhalten eines Flüssigkeitsstandes in dem Behälter (11);
d) Zulassen, dass ein gröberer Anteil der suspendierten Feststoffe durch Schwerkraft sich auf den Boden (18) des Behälters absetzt, während ein feinerer Anteil der suspendierten Feststoffe in der Suspension verbleibt;
e) Kontinuierliche Vorwärtsbewegung einer Vielzahl von beabstandeten Siebmittel (13), welche eine solche Größe haben, dass die Flüssigkeit und der feinere Anteil der suspendierten Feststoffe leicht passieren können, während das die gröberen Feststoffe nicht können, entlang eines endlosen Weges, um die abgesetzten Feststoffe zu sammeln, indem
die Siebmittel in die Flüssigkeit des Behälters von einem ersten Punkt (27) oberhalb der Flüssigkeit zu einem zweiten Punkt (28) am Boden (18) des Behälters abgesenkt werden, wobei Flüssigkeit und feinere suspendierte Feststoffe leicht die Siebmittel passieren,
die Siebmittel seitlich zu einem dritten Punkt (29), der von dem zweiten Punkt (28) beabstandet ist, auf dem Boden vorwärts bewegt werden, wobei die Siebmittel (13) durch Schwerkraft abgesetzte, grobe Feststoffe, welche durch sie nicht hindurchgelangen können, ausbaggern und
die Siebmittel (13), welche gröbere, ausgebaggerte Feststoffe tragen, hochgefahren werden, so dass sie zurück zu dem ersten Punkt (27) gelangen;
f) Weitgehendes Entwässern der gesammelten Feststoffe und Rütteln der Siebmittel (13), welche sich entlang des aufsteigenden Bereiches des Weges und oberhalb des Flüssigkeitsstandes befinden;
g) Umwenden der Siebmittel (13) zum Zurückgewinnen der angesammelten Feststoffe an dem ersten Punkt (27) auβerhalb des Behälters (11);
h) Abziehen geklärter Flüssigkeit aus dem Behälter (11) an einer Stelle (24), die in der Nähe der Oberfläche der Flüssigkeit liegt;
und das **dadurch gekennzeichnet ist, dass**
beim Schritt b) die suspendierte Feststoffe enthaltende Flüssigkeit am ersten Ende (14) des Behälters einfließt;
beim Schritt e) sich der erste Punkt (27) oberhalb der Flüssigkeit am zweiten Ende (15) des Behälters und der dritte Punkt (29) sich nahe des ersten Endes (14) des Behälters befindet und dass die Siebmittel (13), welche gröbere, ausgebaggerte Feststoffe tragen, auf einem diagonalen und verlängerten Weg durch die Flüssigkeit zurück zu dem ersten Punkt (27) hochgefahren werden, so dass suspendierte, feinere Feststoffe dadurch gesammelt werden, dass sie aus der Flüssigkeit durch die Bildung von Filterkuchen aus den gröberen Feststoffen herausgefiltert werden, wodurch die verbleibende Flüssigkeit geklärt wird und die abgeschiedenen Feststoffe und Siebmittel (13) die Flüssigkeit nahe des zweiten Endes (15) verlassen;
beim Schritt f) die entnommenen Feststoffe zusätzlich entwässert werden, indem Luftströme (45) auf die Siebmittel (13) gerichtet werden;
beim Schritt g) Luftströme (45) auf die Siebmittel (13) gerichtet werden, um die Rückgewinnung von entnommenen Feststoffen zu fördern und;
beim Schritt h) die geklärte Flüssigkeit vom zweiten Ende (15) des Behälters (11) abgezogen wird.

2. Verfahren nach Anspruch 1, bei dem bei Schritt b) die suspendierte Feststoffe enthaltende Flüssigkeit in der Nähe des Bodens (18) des Behälters (11) an seinem ersten Ende (14) in den Behälter (11) fließt.

3. Verfahren nach Anspruch 2, bei dem bei Schritt b) geklärte Flüssigkeit der suspendierte Feststoffe enthaltenden, in den Behälter (11) fließenden Flüssigkeit zugemischt wird.

4. Verfahren nach Anspruch 3, bei dem zumindest ein Anteil der geklärten Flüssigkeit, welcher während Schritt b) die suspendierte Feststoffe enthaltende, in den Behälter (11) fließende Flüssigkeit zugemischt wurde, von der geklärten Flüssigkeit zurückgeführt wird, die in Schritt h) an dem zweiten Ende (15) des Behälters abgezogen wird.

5. Verfahren nach Anspruch 4, bei welchem der Schritt c) es beinhaltet, dass die Größe der Siebmittel (13) verändert wird, so dass die Fraktion der suspendierten Feststoffe, welche vom Boden (18) des Behälters ausgehoben werden gegenüber denen, welche aus der Flüssigkeit gefiltert werden, verändert wird.

6. Verfahren nach Anspruch 4, bei welchem der Schritt b) es beinhaltet, dass die suspendierte Feststoffe enthaltende Flüssigkeit zunächst in einen konischen Behälter (19) fließt, der nach unten konvergierende Wände und einen unteren Auslass hat, wobei der genannte Behälter (19) derart angeordnet ist, dass sein Auslass sich unterhalb des Flüssigkeitsstandes am ersten Ende (14) des Behälters in der Nähe und oberhalb des dritten Punktes (29) befindet, so dass in den Behälter (11) fließende Flüssigkeit auf die aufsteigenden Siebmittel (13) auftrifft.

7. Verfahren nach Anspruch 6, welches es weiterhin beinhaltet, dass die suspendierte Feststoffe enthaltende Flüssigkeit in dem konischen Behälter (19) in Rotation versetzt wird, so dass Feststoffe in der Flüssigkeit nach außen gezwungen werden, um den Gehalt an Feststoffen an den genannten konvergierenden Wänden zu konzentrieren, bevor die Flüssigkeit austritt und die konzentrierten Feststoffe abwärts auf die aufsteigenden Siebmittel (13) gezwungen werden.

8. Verfahren nach Anspruch 7, bei dem beim Schritt f) die Feststoffe, welche auf den Siebmitteln (13) angesammelt wurden, dadurch entwässert werden, dass die Siebmittel (13) auf einem oberhalb der Flüssigkeit angeordneten Schwingtisch (40) gehalten und über ihn fortbewegt werden und bevor der Förderer (12) zum ersten Punkt (27) zurückkehrt.

9. Verfahren nach Anspruch 7, bei dem der Schritt e) ein Reinigen der Siebmittel (13) vor der Rückkehr zu dem zweiten Punkt (28) durch Besprühen (46) der Siebmittel mit geklärter Flüssigkeit einschließt, wobei die Waschflüssigkeit und irgendwelche Feststoffrückstände zurück in den Behälter (11) geleitet werden.

10. Verfahren nach Anspruch 4, bei dem bei Schritt b) die suspendierte Feststoffe enthaltende, in den Behälter (11) fließende Flüssigkeit mit einem Flockungsmittel vermischt wird, um zumindest einem Teil der suspendierten Feststoffe in Feststoffflocken umzuwandeln, wobei ein grober Anteil der Feststoffflocken sich aufgrund der Schwerkraft auf den Boden (18) des Behälters absetzt und ein feinerer Anteil der geflockten Feststoffe und suspendierten Feststoffe als Suspension in der Flüssigkeit verbleibt, wobei der grobe Anteil der Flocken und der feinere Anteil der Flocken und der suspendierten Feststoffe ausgebaggert werden, wenn die Siebmittel (13) sich zwischen dem zweiten und dritten Punkt (28, 29) bewegen, und wobei die feineren, suspendierten Feststoffe und die nicht abgesetzten Flocken durch die Feststoffauflage gefiltert werden, wenn die Siebmittel (13) sich durch die Flüssigkeit zwischen dem dritten und ersten Punkt (29, 27) bewegen.

11. Verfahren nach Anspruch 10, bei dem bei Schritt f) die gewonnenen Feststoffe in Form von Flocken durch Rütteln auf einem Tisch (40) mit einer Frequenz entwässert werden, die nicht ausreicht, um die Feststoffe aus den Flocken freizugeben.

12. Verfahren nach Anspruch 11, bei dem die Siebmittel mit einer Frequenz von etwa 30 Hz gerüttelt werden.

13. Verfahren nach Anspruch 10, bei dem der Schritt b) es beinhaltet, dass ein feststoffkonzentrierter Strom, ein Schlammstrom (66, 67) aus der Flüssigkeit mit suspendierten Feststoffen, zu dem Boden (18) des Behälters gerichtet wird, um ihn durch die Siebmittel (13) auszubaggern.

14. Verfahren nach Anspruch 13, bei dem der feststoffkonzentrierte Strom, ein Schlammstrom (66, 67) aus der Flüssigkeit mit suspendierten Feststoffen, angrenzend an der Wand des konischen Behälters (19) ausgetragen wird.

15. Verfahren nach Anspruch 14, bei dem der feststoffkonzentrierte Strom, ein Schlammstrom (66, 67) aus der Flüssigkeit mit suspendierten Feststoffen, ein Unterstrom aus Hydrozyklonen ist.

16. Verfahren nach Anspruch 7, bei dem bei Schritt b) die in den Behälter fließende Flüssigkeit gebrauchter Bohrschlamm (3) ist.

17. Verfahren nach Anspruch 16, bei dem der Schlamm (3) von dem Schlammsumpf (70) eines Bohrturms (1) einer Ölquelle stammt.

18. Verfahren nach Anspruch 16, bei dem der Schlamm (3) unmittelbar aus dem Schlammtank (8) eines Bohrturms (1) einer Ölquelle stammt.

19. Verfahren nach Anspruch 18, bei dem die geklärte Flüssigkeit, welche vom zweiten Ende des Behälters (15) abgezogen wurde, dem Schlammtank (8) zurückgeführt wird, um weiteren Schlamm (3) aufzubereiten.

20. Verfahren nach Anspruch 7, bei dem bei Schritt b) die suspendierte Feststoffe enthaltende Flüssigkeit gebrauchter Bohrschlamm (3) aus einem Schlammtank (8) ist, wobei der Schlamm zurückgewinnbare, nützliche Bestandteile und gebohrte Feststoffe enthält und das Verfahren weiterhin Folgendes beinhaltet:
Verarbeiten des Schlamms in Hydrozyklonen, um eine feststoffangereicherte Hydrozyklon-Unterstrom-Flüssigkeit und eine geklärte Überlauf-Flüssigkeit zu erzeugen;
Rückführen der Überlauf-Flüssigkeit in den Schlammtank (8);
Vermischen eines selektiven Flockungsmittels mit der Hydrozyklon-Unterstrom-Flüssigkeit und Strömen der mit Feststoffen angereicherten Unterstrom-Flüssigkeit und des Flockungsmittels zu dem ersten Ende (14) des Behälters (11), wobei das selektive Flockungsmittel nur den Teil der feinen Feststoffe, welche gebohrte Feststoffe sind, zusammenballt, um Flocken zu bilden, so dass eine wesentliche Zusammenballung von feinen Feststoffen, bei denen es sich um nützliche Bestandteile des Schlamms handelt, vermieden wird.

21. Verfahren nach Anspruch 1, bei dem in Schritt b) die Feststoffe, welche in der in das erste Ende (14) des Behälters fließenden Flüssigkeit enthalten sind, sowohl aus Feststoffen mit hoher als auch geringer Dichte bestehen, wobei die Feststoffe mit hoher Dichte sowohl grobe als auch feine Fraktionen aufweisen und das Verfahren Folgendes aufweist:
Gewinnung von überwiegend groben Feststoffen hoher Dichte durch Schlammabzug, wobei die Konzentration von feineren Feststoffen mit hoher und geringer Dichte anfänglich in der Flüssigkeit gering ist und dadurch durch Filtern wenig angesammelt wird, und anschließende Entwässerung und Förderung außerhalb des Behälters (11);
Rückgewinnung der angesammelten groben Feststoffe mit hoher Dichte außerhalb des Behälters (11) und Abziehen einer geklärten Flüssigkeit, die im Laufe der Zeit eine ansteigende Menge von Feststoffrückständen enthält, die feine Feststoffe mit hoher Dichte und Feststoffe mit geringer Dichte aufweisen und sobald die Menge von Feststoffrückständen, welche mit den groben Feststoffen hoher Dichte abgeschieden wurden, zu hoch wird:
Flocken der Feststoffrückstände, so dass zumindest ein Teil der Feststoffrückstände Flocken bildet;
Sammeln der Flocken und der feinen Feststoffrückstände hoher Dichte und der Feststoffe geringer Dichte zunächst durch Schlammabzug und dann durch Filtern; und
Rückgewinnung einer geklärten Flüssigkeit und Rückgewinnung der gesammelten Flocken und der Feststoffrückstände außerhalb des Behälters, wobei die genannten gesammelten Flocken und Feststoffrückstände aus den zuvor gewonnenen, groben Feststoffen hoher Dichte getrennt voneinander wiedergewonnen werden.

22. Verfahren nach Anspruch 20, bei dem bei Schritt b) die Viskosität der in den Behälter (11) fließenden Flüssigkeit durch Vermischen mit geklärter Flüssigkeit eingestellt wird.

23. Verfahren nach Anspruch 1, bei dem die Feststoffe grobe Feststoffe enthalten, welche mit ultrafeinen Feststoffen kontaminiert sind, und bei dem sie separat zurückgewonnen werden, wobei das Verfahren weiterhin auf Folgendem besteht:
Vermischen der suspendierte Feststoffe enthaltenden Flüssigkeit mit geklärter Flüssigkeit, welche aus dem Behälter (11) zurückgewonnen wurde, so dass ultrafeine Feststoffe von den groben Feststoffen ausgewaschen werden können;
Zurückgewinnung von überwiegend groben Feststoffen außerhalb des Behälters durch Schlammabzug mit der Siebeinrichtung (13) und während die Konzentration der suspendierten, ultrafeinen Feststoffe in der Flüssigkeit des Behälters ansteigt;
Abbrechen des Zuführens von Feststoffe enthaltender Flüssigkeit zu dem Behälter (11), sobald die Konzentration der suspendierten, ultrafeinen Feststoffe, welche mit ausgebaggerten, groben Feststoffen gefiltert wurden, ein bestimmtes Maß erreicht;
Flocken der suspendierten, ultrafeinen Feststoffe zum Zusammenballen zumindest eines Teils der suspendierten, ultrafeinen Feststoffe zu Flocken, welche ausreichend groß sind, um ihr Sammeln auf den Siebmitteln zu ermöglichen, während geklärte Flüssigkeit vom zweiten Ende (15) des Behälters zu seinem ersten Ende (14) zurückgeführt wird;
Sammeln von Flocken und ultrafeinen Feststoffen auf den Siebmitteln (13) durch Schlammabzug und Filtern;
Entwässern der gewonnenen Flocken und ultrafeinen Feststoffe durch Rütteln der feststofftragenden Siebmittel (13), welche entlang des aufsteigenden Bereiches des Weges und oberhalb des Flüssigkeitsstandes liegen, und weiterhin dadurch, dass Luftströme auf das Siebgut gerichtet werden; und
Rückgewinnung der entwässerten, gesammelten Flocken und ultrafeinen Feststoffe durch Vorschub der Siebmittel (13) bis zu zum ersten Punkt (27).

24. Vorrichtung zum Abtrennen von Feststoffen aus einer Flüssigkeit, die grobe Feststoffe enthält, welche sich durch Schwerkraft auf den Boden des Behälters absetzen und die feine Feststoffe enthält, welche in Suspension bleiben, wobei die Vorrichtung Folgendes aufweist:
ein Absetzbehälter (11) mit Seitenwänden, einem Boden (18), einem ersten Ende (14) und einem zweiten Ende (15);
ein Flüssigkeitseinlass (21) zum Zuführen von Flüssigkeit in den Behälter (11);
ein Flüssigkeitsauslass (24) zum Aufrechterhalten eines Flüssigkeitsstandes in dem Behälter (11) und zum Abziehen von geklärter Flüssigkeit aus dem Behälter (11);
ein endloses Band eines Förderers (12), welches gleichförmig auf einer Bewegungsbahn von einem außerhalb des Behälters (11) liegenden Punkt durch die Flüssigkeit in dem Behälter (11) und zurück zu dem Punkt umlaufen kann;
eine Vielzahl von Siebmitteln (13), die entlang des Förderers (12) verteilt sind, wobei die Siebmittel (13) so bemessen sind, dass im sauberen Zustand Flüssigkeit und die feinen, suspendierten Feststoffe durch sie hindurch gelangen können;
Mittel zum Führen des endlosen Förderers (12), welche einen ersten Punkt (27) oberhalb der Flüssigkeit am zweiten Ende (15) des Behälters und einen zweiten, neben dem Boden (18) des Behälters liegenden Punkt (28) einschließen, wobei die Punkte den Förderer (12) und die Siebmittel (13) entlang eines Weges führen, um Feststoffe zu sammeln, indem die groben, durch Schwerkraft abgesetzten Feststoffe, welche außerstande sind, das Siebmittel (13) zu passieren, als Schlamm entfernt werden;
Mittel (40) zum Rütteln der Siebmittel (13), die entlang des aufsteigenden Bereichs des Weges und oberhalb des Flüssigkeitsstandes liegen, um die gesammelten Feststoffe zu entwässern;
und welches durch Folgendes **gekennzeichnet** ist:
Der Flüssigkeitseinlass (21) ist am ersten Ende des Behälters angeordnet.
Der Flüssigkeitsauslass (24) ist am zweiten Ende des Behälters angeordnet.
Die Mittel zum Führen des endlosen Förderers (12) weisen zumindest einen dritten, an dem Boden (18) angrenzenden Punkt (29) auf, der vom zweiten Punkt abweicht und angrenzend zum ersten Ende (14) des Behälters liegt, wobei die zumindest drei Punkte (27, 28,29) den Förderer (12) und die Siebmittel (13) entlang eines Weges führen, um Feststoffe zwischen dem zweiten und dritten Punkt (28, 29) aufzunehmen und dann zwischen dem dritten und ersten Punkt (29, 27) hochzufahren und dabei die Flüssigkeit entlang eines diagonalen und verlängerten Weges zu durchqueren, so dass die feinen, suspendierten Feststoffe durch die ausgebaggerten, groben Feststoffe gefiltert werden, bevor sie die Flüssigkeit verlassen.
Mittel (43) zum Richten eines Luftstromes auf das Siebgut der Siebmittel, um die gesammelten Feststoffe weiter zu entwässern.
Mittel (45) zum Richten von Luft zur Rückseite der Siebmittel (13), um dort Feststoffrückstände abzureinigen und sie außerhalb des Behälters (11) abzuladen, sobald die Siebmittel über einem Punkt (27) umgelenkt werden, um ein entwässertes Feststoffprodukt zurückzugewinnen.

25. Abscheidevorrichtung nach Anspruch 24, bei der die Seitenwände des Behälters nach innen hin in Richtung des Bodens schräg geneigt sind, so dass die Feststoffe, welche sich in Richtung des Weges des Förderers (12) und der Siebmittel (13) absetzen, wenn sie sich entlang des Bodens des Behälters voran bewegen, kanalisiert werden.

26. Abscheidevorrichtung gemäß Anspruch 25, bei der die Siebmittel (13) beabstandete, konkave Schöpflöffel aufweisen, wobei jeder Schöpflöffel Wände (30, 32) hat, die ein Volumen umschließen, welches eine in Bewegungsrichtung des Förderers weisende Öffnung (31) aufweist, und bei der die Wände (30, 32) der Schöpflöffel aus Siebmaterial (34) bestehen, wobei sich die genannten Schöpflöffel (13) radial nach außen vom Förderer weg erstrecken, so dass sie nach unten vom Förderer weg gerichtet sind, wenn sie sich abwärts und vorwärts entlang des Bodens des Behälters zwischen dem zweiten und dritten Punkt (28, 29) bewegen und radial nach oben, vom Förderer weg weisen, wenn sie zwischen dem dritten und ersten Punkt (29, 27) aufsteigen.

27. Abscheidevorrichtung nach Anspruch 26, bei der der Flüssigkeitsauslass (24) ein Wehr aufweist, über welches geklärtes Wasser fließt.

28. Abscheidevorrichtung nach Anspruch 27, bei der der endlose Förderer (12) eine parallele Gliederkette (26) aufweist, zwischen welcher sich die Siebmittel (13) erstrecken, und bei der die ersten, zweiten und dritten Punkte (27, 28, 29) Kettenräder sind, wobei eines der Kettenräder angetrieben ist und die anderen beiden mitlaufende Kettenräder sind.

29. Abscheidevorrichtung nach Anspruch 28, bei der das Kettenrad an dem ersten Punkt (27) derart angeordnet ist, dass beim Umrunden des Kettenrades durch die Schöpflöffel (13) die Schöpflöffel (13) an einem außerhalb des Behälters (11) liegenden Punkt (44) nach außen und überkopf ausgerichtet sind, um gesammelte Feststoffe zu entladen.

30. Abscheidevorrichtung nach Anspruch 29, bei der jeder Schöpflöffel ein rechtwinkliges, prismatisches Volumen einschließt und eine rechtwinklige Rückwand (30), eine führende, rechtwinklige Öffnung (31) und im Wesentlichen trapezförmige Seitenwände (32) hat, wobei jede Wand aus einem auswechselbaren Siebmaterial (34) gebildet ist.

31. Abscheidevorrichtung nach Anspruch 30, welche weiterhin
Mittel (44) zum Sammeln der gewonnenen Feststoffe und
Mittel (50) zum Transportieren der gewonnenen Feststoffe zu einer Entnahmestelle aufweist, die vom Absetzbehälter (11) entfernt liegt.

32. Abscheidevorrichtung nach Anspruch 31, bei der die Transportmittel (50) für die gewonnenen Feststoffe weiterhin Mittel (54) zum zyklischen Einwirken auf die Feststoffe durch Pressen und Entspannen aufweist, so dass während des Pressens weiteres Wasser von den Feststoffen entfernt wird, welches sich an der Schnittstelle zwischen den Feststoffen und einer Pumpeinrichtung sammelt und während des Entspannens die Flüssigkeit frei von den Feststoffen wegfließt, wodurch die Feststoffe zusätzlich entwässert werden, bevor sie an der entfernten Stelle freigegeben werden.

## Revendications

1. Procédé pour séparer les solides d'un liquide, le procédé comprenant :
(a) la fourniture d'un réservoir de décantation (11) ayant des côtés, un fond (18) et des première et seconde extrémités (14, 15) ;
(b) le déversement de liquide contenant des solides en suspension dans le réservoir (11) ;
(c) le maintien d'un niveau de liquide dans le réservoir (11) ;
(d) le fait de permettre à une portion plus grossière de solides en suspension de décanter par gravité sur le fond du réservoir (18), tandis qu'une portion plus fine de solides en suspension reste en suspension ;
(e) l'acheminement en continu d'une pluralité de moyens de tamisage espacés (13) ayant une taille qui permet au liquide et à la portion plus fine de solides en suspension de passer facilement, tandis que les solides plus grossiers ne le peuvent pas, le long d'un chemin sans fin pour collecter les solides qui ont décanté, par
• descente des moyens de tamisage dans le liquide du réservoir à partir d'un premier point (27), situé au-dessus du liquide, vers un second point (28) situé au fond du réservoir (18), le liquide et les solides plus fins en suspension passant facilement au travers des moyens de tamisage ;
• acheminement des moyens de tamisage latéralement à partir du second point (28) vers un troisième point (29), unique sur le fond, les moyens de tamisage (13) collectant par gravité de dragage les solides grossiers décantés qui ne peuvent passer au travers ; et
• ascension des moyens de tamisage (13) portant des solides grossiers dragués pour retourner au premier point (27) ;
(f) l'évacuation sensible de l'eau des solides collectés et la vibration des moyens de tamisage (13) qui s'étendent le long de la portion ascendante du chemin et sont au-dessus du niveau de liquide ;
(g) le renversement des moyens de tamisage (13), à l'extérieur du réservoir (11), pour récupérer les solides collectés au premier point (27) ; et
(h) l'extraction du liquide clarifié depuis le réservoir (11) en un point (24) adjacent à la surface du liquide ;
**caractérisé par** :
dans l'étape (b), le déversement du liquide contenant les solides en suspension dans la première extrémité du réservoir (14) ;
dans l'étape (e), le premier point (27) est situé au-dessus du liquide au niveau de la seconde extrémité du réservoir (15), le troisième point (29) est adjacent à la première extrémité du réservoir (14), et les moyens de tamisage (13) portant les solides grossiers dragués sont remontés, via un chemin diagonal et prolongé au travers du liquide, pour revenir au premier point (27), de telle façon que les solides plus fins en suspension sont collectés par leur filtration à partir du liquide et à travers la formation d'un gâteau de filtration des solides grossiers, le liquide restant devenant clarifié, les solides collectés et les moyens de tamisage (13) sortant du liquide en un point adjacent à la seconde extrémité (15) ;
dans l'étape (f), l'évacuation additionnelle de l'eau des solides collectés en dirigeant des jets d'air (45) sur les moyens de tamisage (13) ;
dans l'étape (g), la direction des jets d'air (45) sur les moyens de tamisage (13) pour aider à la récupération des solides collectés ; et
dans l'étape (h), l'extraction du liquide clarifié à partir de la seconde extrémité (15) du réservoir (11).

2. Procédé selon la revendication 1, dans lequel, dans l'étape (b), le liquide contenant les solides en suspension est déversé dans le réservoir (11) en un endroit adjacent au fond du réservoir (18) au niveau de sa première extrémité (14).

3. Procédé selon la revendication 2, dans lequel l'étape (b) comprend le mélange du liquide clarifié avec le liquide contenant les solides en suspension se déversant dans le réservoir (11).

4. Procédé selon la revendication 3, dans lequel au moins une portion du liquide clarifié dans l'étape (b), mélangée avec le liquide contenant les solides en suspension déversés dans le réservoir (11), est recyclée à partir du liquide clarifié extrait au niveau de la seconde extrémité (15) du réservoir à l'étape (h).

5. Procédé selon la revendication 4, dans lequel l'étape (c) comprend le changement de taille des moyens de tamisage (13) de façon à modifier la fraction de solides en suspension qui sont dragués à partir du fond du réservoir (18) par rapport à ceux filtrés à partir du liquide.

6. Procédé selon la revendication 4, dans lequel l'étape (b) comprend un premier déversement de liquide contenant des solides en suspension dans un récipient en forme de cône (19) ayant des parois descendantes convergeantes et une évacuation inférieure, ledit récipient (19) étant positionné de telle façon que son évacuation est située en dessous du niveau de liquide au niveau de la première extrémité du réservoir (14), adjacente et au-dessus du troisième point (29), de telle façon que le liquide se déversant dans le réservoir (11) vient heurter les moyens de tamisage ascendants (13).

7. Procédé selon la revendication 6, comprenant en outre la mise en rotation du liquide contenant des solides en suspension dans le récipient en forme de cône (19) de telle façon que les solides dans le liquide sont repoussés vers l'extérieur pour concentrer, contre lesdites parois convergeantes, les solides contenus dans le liquide avant d'évacuer le liquide et les solides concentrés, vers le bas, sur les moyens de tamisage ascendants (13).

8. Procédé selon la revendication 7, dans lequel, dans l'étape (f), les solides collectés sur les moyens de tamisage (13) sont débarrassés de leur eau en supportant et en acheminant les moyens de tamisage (13) au-dessus d'une table vibrante (40) située au-dessus du liquide et avant que le transporteur (12) ne retourne au premier point (27).

9. Procédé selon la revendication 7, dans lequel l'étape (e) comprend le nettoyage des moyens de tamisage (13), avant leur retour au second point (28), par pulvérisation (46) des moyens de tamisage avec du liquide clarifié, le liquide de lavage et tout résidu solide étant redirigé dans le réservoir (11).

10. Procédé selon la revendication 4, dans lequel, dans l'étape (b), le liquide contenant les solides en suspension se déversant dans le réservoir (11) est mélangé avec un floculant pour l'agrégation d'au moins une portion des solides en suspension sous la forme de solides en floculat, une portion grossière des solides en floculat se déposant par gravité sur le fond du réservoir (18) et une portion plus fine des solides en floculat et des solides en suspension restant en suspension dans le liquide, la portion grossière du floculat et la portion plus fine du floculat et les solides en suspension étant collectés par dragage tandis que les moyens de tamisage (13) avancent entre les second et troisième points (28, 29), et les solides plus fins en suspension et le floculat non décanté étant filtrés par les moyens supports de solides tandis que les moyens de tamisage (13) avancent au travers du liquide entre les troisième et premier points (29, 27).

11. Procédé selon la revendication 10, dans lequel, dans l'étape (f), les solides collectés sous la forme de floculat sont débarrassés de leur eau en les faisant vibrer sur une table (40) à une fréquence qui est insuffisante pour libérer des solides du floculat.

12. Procédé selon la revendication 11, dans lequel les moyens de tamisage sont mis en vibration à une fréquence d'environ 30 Hz.

13. Procédé selon la revendication 10, dans lequel l'étape (b) comprend la direction d'un courant hélicoïdal (66, 67), concentré en solides, du liquide contenant des solides en suspension, vers le fond du réservoir (18) pour dragage par les moyens de tamisage (13).

14. Procédé selon la revendication 13, dans lequel le courant hélicoïdal (66,67), concentré en solides, du liquide contenant les solides en suspension est évacué en un endroit adjacent à la paroi du récipient en forme de cône (19).

15. Procédé selon la revendication 14, dans lequel le courant hélicoïdal (66,67), concentré en solides, du liquide contenant les solides en suspension est soutiré depuis des hydroclones.

16. Procédé selon la revendication 7, dans lequel, dans l'étape (b), le liquide se déversant dans le réservoir est de la boue de forage usagée (3).

17. Procédé selon la revendication 16, dans lequel la boue (3) a pour origine le puisard de boue (70) d'une plate-forme de forage pétrolier (1).

18. Procédé selon la revendication 16, dans lequel la boue (3) a pour origine directe le réservoir de boue (8) d'une plate-forme de forage pétrolier (1).

19. Procédé selon la revendication 18, dans lequel le liquide clarifié, extrait depuis la seconde extrémité du réservoir (15), est recyclée vers le réservoir de boue (8) pour la préparation de davantage de boue (3).

20. Procédé selon la revendication 7, dans lequel, dans l'étape (b), le liquide contenant les solides en suspension est de la boue de forage usagée (3) d'un réservoir de boue (8), la boue contenant des constituants récupérables et bénéfiques et des solides issus du forage, le procédé comprenant en outre :
le traitement de la boue en hydroclones pour produire un liquide concentré en solides soutiré de l'hydroclone, et un liquide clarifié de trop-plein ;
le recyclage du liquide de trop-plein vers le réservoir de boue (8) ;
le mélange d'un floculant sélectif avec le liquide soutiré de l'hydroclone et le déversement du liquide soutiré concentré en solides et du floculant vers la première extrémité (14) du réservoir (11), le floculant sélectif s'agrégeant seulement avec cette portion des solides fins qui sont des solides issus du forage pour former un floculat de façon à éviter une agrégation sensible des solides fins qui sont des constituants bénéfiques de la boue.

21. Procédé selon la revendication 1, dans lequel, dans l'étape (b), les solides contenus dans le liquide se déversant dans la première extrémité du réservoir (14) comprennent des solides de haute et de basse densité, les solides de haute densité ayant une fraction fine et une fraction grossière, le procédé comprenant :
la collecte des solides principalement grossiers de haute densité par dragage, la concentration de solides plus fins de haute densité et de faible densité dans le liquide étant initialement faible et, par conséquent, peu de ces solides étant collecté par filtration, puis l'évacuation de l'eau de ces solides et leur acheminement à l'extérieur du réservoir (11);
la récupération des solides collectés grossiers de haute densité à l'extérieur du réservoir (11) et l'extraction d'un liquide clarifié qui, au cours du temps, contient une quantité croissante de solides résiduels comprenant des solides fins de haute densité et des solides de basse densité et, quand la quantité de solides résiduels collectés avec les solides grossiers de haute densité devient trop élevée :
la floculation des solides résiduels pour agréger au moins une portion des solides résiduels sous la forme de floculat;
la collecte du floculat et des solides résiduels fins de haute densité et des solides de faible densité par dragage, puis par filtrage ; et
la récupération d'un liquide clarifié et la récupération du floculat collecté et des solides résiduels à l'extérieur du réservoir, ledit floculat étant collecté et lesdits solides résiduels étant récupérés séparément à partir des solides grossiers de haute densité récupérés auparavant.

22. Procédé selon la revendication 20, dans lequel, dans l'étape (b), la viscosité du liquide se déversant dans le réservoir (11) est manipulée par mélange avec du liquide clarifié.

23. Procédé selon la revendication 1, dans lequel les solides comprennent des solides grossiers contaminés par des solides ultrafins et sont récupérés séparément, le procédé comprenant en outre :
le mélange du liquide contenant les solides en suspension avec le liquide clarifié récupéré à partir du réservoir (11) pour séparer par lavage les solides ultrafins d'avec les solides grossiers ;
la récupération des solides principalement grossiers à l'extérieur du réservoir (11) par dragage avec les moyens de tamisage (13), alors que la concentration des solides ultrafins en suspension augmente dans le liquide du réservoir ;
l'interruption de la fourniture, dans le réservoir (11), de liquide contenant des solides quand la concentration en solides ultrafins en suspension filtrés, avec les solides grossiers dragués, atteint un certain niveau ;
la floculation des solides ultrafins en suspension pour l'agrégation d'au moins une portion des solides ultrafins en suspension en un floculat ayant une masse suffisante pour faciliter leur collecte sur les moyens de tamisage alors que le liquide clarifié est recyclé à partir de la seconde extrémité du réservoir (15) vers sa première extrémité (14) ;
la collecte du floculat et des solides ultrafins sur les moyens de tamisage (13) par dragage et filtrage ;
l'évacuation de l'eau du floculat collecté et des solides ultrafins par vibration des moyens de tamisage (13) contenant les solides, lesquels moyens de tamisage s'étendent le long de la portion ascendante du chemin et sont au-dessus du niveau de liquide, et en outre par direction de jets d'air sur le contenu des tamis ; et
la récupération du floculat et des solides ultrafins collectés, débarrassées de leur eau, par acheminement des moyens de tamisage (13) vers le premier point (27).

24. Appareil pour séparer des solides d'un liquide incluant des solides grossiers qui décantent par gravité sur le fond d'un réservoir, et des solides fins qui restent en suspension, l'appareil comprenant :
un réservoir de décantation (11) ayant des parois de côté, un fond (18), une première extrémité (14) et une seconde extrémité (15) ;
une entrée de liquide (21) pour fournir en liquide le réservoir (11) ;
une sortie de liquide (24) pour maintenir un niveau de liquide dans le réservoir et extraire le liquide clarifié du réservoir (11) ;
une boucle sans fin de transporteur (12) qui est acheminable en continu le long d'un chemin depuis un point extérieur jusqu'au réservoir (11) au travers du liquide dans le réservoir (11) et par retour audit point ;
une pluralité de moyens de tamisage (13) espacés le long du transporteur (12), les moyens de tamisage (13) étant d'une taille telle que le liquide, quand il est clair, et les solides fins en suspension peuvent passer au travers ;
des moyens pour guider le transporteur sans fin (12) incluant un premier point (27) au-dessus du liquide au niveau de la seconde extrémité du réservoir (15), un second point (28) adjacent au fond du réservoir (18), les points guidant le transporteur (12) et les moyens de tamisage (13) le long d'un chemin pour collecter les solides par dragage des solides grossiers déposés par gravité qui sont incapables de passer au travers des moyens de tamisage (13) ;
des moyens (40) pour faire vibrer les moyens de tamisage (13) qui s'étendent le long de la portion ascendante du chemin et qui sont au-dessus du niveau de liquide pour débarrasser de leur eau des solides collectés ;
**caractérisé en ce que** :
l'entrée de liquide (21) est positionnée au niveau de la première extrémité du réservoir ;
la sortie de liquide (24) est positionnée au niveau de la seconde extrémité du réservoir ;
les moyens pour guider le transporteur sans fin (12) incluent au moins un unique troisième point (29) positionné adjacent au fond (18) à partir du second point et adjacent à la première extrémité du réservoir (14), les au moins trois points (27, 28, 29) guidant le transporteur (12) et les moyens de tamisage (13) le long d'un chemin pour collecter les solides entre les second et troisième points (28, 29) et deuxièmement entre les troisième et premier points (29, 27) pour traverser le liquide le long d'un chemin ascendant en diagonale et prolongé pour collecter les solides fins en suspension par filtration au travers des solides grossiers dragués avant la sortie du liquide ;
des moyens (43) pour diriger un courant d'air sur le contenu des moyens de tamisage pour débarrasser davantage les solides collectés de leur eau ;
des moyens (45) pour diriger l'air sur l'arrière des moyens de tamisage (13) pour en nettoyer les solides résiduels et les rejeter à l'extérieur du réservoir (11) quand les moyens de tamisage sont renversés par dessus un point (27) pour récupérer un produit de solides dont l'eau a été éliminée.

25. Appareil de séparation selon la revendication 24, dans lequel les parois de côté du réservoir ont une pente vers l'intérieur en direction du fond, canalisant ainsi, à la manière d'un entonnoir, les solides qui décantent en direction du chemin du transporteur (12) et des moyens de tamisage (13) avançant le long du fond du réservoir.

26. Appareil de séparation selon la revendication 25, dans lequel les moyens de tamisage (13) comprennent des godets concaves espacés, chaque godet ayant des parois (30, 32) formant un volume qui a une ouverture (31) faisant face à la direction d'acheminement du transporteur et les parois du godet (30, 32) sont formées d'un matériau de tamisage (34), lesdits godets (13) s'étendant radialement vers l'extérieur à partir du transporteur de manière à pendre vers le bas depuis le transporteur lorsqu'ils descendent et avancent le long du fond du réservoir entre les second et troisième points (28, 29) et à se tenir radialement vers le haut depuis le transporteur lorsqu'ils montent entre les troisième et premier points (29, 27).

27. Appareil de séparation selon la revendication 26, dans lequel la sortie de liquide (24) comprend un déversoir par dessus lequel se déverse l'eau clarifiée.

28. Appareil de séparation selon la revendication 27, dans lequel le transporteur sans fin (12) comprend une chaîne à maillons parallèles (26) entre lesquels s'étendent les moyens de tamisage (13), les premier, second et troisième points (27, 28, 29) étant des pignons, l'un des pignons étant entraîné et les deux autres étant des pignons fous.

29. Appareil de séparation selon la revendication 28, dans lequel le pignon au niveau du premier point (27) est positionné de telle façon que, lorsque les godets (13) font le tour du pignon, les godets (13) se projettent vers l'extérieur et se renversent en un point externe (44) au réservoir (11) pour mettre au rebut les solides collectés.

30. Appareil de séparation selon la revendication 29, dans lequel chaque godet (13) définit un volume de prisme droit, ayant une paroi arrière rectangulaire (30), une première ouverture rectangulaire (31) et des parois de côté (32) sensiblement trapézoïdales, chaque paroi étant formée d'un matériau de tamisage remplaçable (34).

31. Appareil de séparation selon la revendication 30, comprenant en outre :
des moyens (44) pour collecter les solides récupérés ; et
des moyens (50) pour acheminer les solides récupérés vers un emplacement d'évacuation éloigné du réservoir de décantation (11).

32. Appareil de séparation selon la revendication 31, dans lequel les moyens (50) d'acheminement des solides récupérés comprennent en outre des moyens (54) pour soumettre, de manière cyclique, les solides à une compression et une décompression, de telle façon que, durant la compression, de l'eau additionnelle est séparée des solides à collecter le long de l'interface entre les solides et un moyen de pompage et, durant la décompression, le liquide sans solides est drainé, grâce à quoi davantage d'eau est éliminée des solides avant l'évacuation à l'emplacement éloigné.
